# EUROPEAN PATENT APPLICATION

(11) **EP 1 566 910 A2**
(43) Date of publication of application: **24.08.2005**
(21) Application number: 05002026.2
(22) Date of filing: 01.02.2005
(51) Int. Cl.: H04J 14/02

(54) **Optical data network**

(30) Priority: 19.02.2004 US 782653
(71) Applicant: FUJITSU LIMITED, Kawasaki 211-8588 (JP)
(72) Inventor: Kinoshita, Susumu, Fuchu-shi Tokyo 183-0032 (US); Vassilieva, Olga I., Plano Texas 75093-5197 (US); Tian, Cechan, Plano Texas 75025-2068 (US); Aoki, Yasuhiko, Kawasaki Kanagawa, 211-0041 (JP)
(74) Representative: HOFFMANN EITLE

(57) **Abstract**

A system and method for transmitting traffic in an optical network is provided. The system includes an optical ring. A plurality of local nodes are coupled to the optical ring. Each local node of the plurality of local nodes configured to receive traffic at an assigned wavelength, disparate from wavelengths assigned to other local nodes. A data center node is coupled to the optical ring and operable to receive traffic from the plurality of local nodes, sort at least some of the traffic by destination, and transmit the traffic to a corresponding destination node at the assigned wavelength for that node.

## Description

### TECHNICAL FIELD

The present invention relates generally to optical transport systems, and more particularly to a photonic data storage network.

### BACKGROUND

Telecommunication systems, cable television systems and data communication networks use optical networks to rapidly convey large amounts of information between remote points. In an optical network, information is conveyed in the form of optical signals through optical fibers. Optical fibers comprise thin strands of glass capable of transmitting the signals over long distances with very low loss.

Optical networks often employ wavelength division multiplexing (WDM) or dense wavelength division multiplexing (DWDM) to increase transmission capacity. In WDM and DWDM networks, a number of optical channels are carried in each fiber at disparate wavelengths. Network capacity is based on the number of wavelengths, or channels, in each fiber and the bandwidth or size of the channels. Network capacity in a ring network is also limited by data processing at each node in the ring.

The topology in which WDM and DWDM networks are built plays a key role in determining the extent to which such networks are utilized. Ring topologies are common in today's networks. WDM nodes serve as network elements on the periphery of such optical rings and traditionally require optical-to-electrical conversion at each node to route data to local clients. WDM add/drop equipment at each network element (node) typically employs optical-to-electrical or electrical-to-optical conversion of each constituent channel to add, drop, or pass a channel.

### SUMMARY

A method and system for transmitting information in a photonic data storage network are provided. A data center node receives traffic, sorts traffic by destination, and transmits signals at wavelengths assigned to the destination, wherein at least one wavelength is disparate from wavelengths assigned to other nodes in a network or system.

In accordance with one embodiment, the system includes an optical ring. A plurality of nodes are coupled to the optical ring. Each node of the plurality of nodes is configured to receive traffic at an assigned wavelength, disparate from wavelengths assigned to other nodes. A data center node is coupled to the optical ring and operable to receive traffic from the plurality of nodes, sort at least some of the traffic by destination, and transmit the traffic to a corresponding destination node at the assigned wavelength for that node.

Technical advantages include providing a centralized data storage and processing facility. In one embodiment, a remote location for the centralized data storage and processing facility provide greater security for the optical network and stored data. Other advantages of one or more embodiments may include a reduction in the cost of maintaining the optical network due to sharing storage resources by various enterprises, lower cost due to placing the storage facility outside an urban location, and simple local node configuration. Other advantages of one or more embodiments may include reducing, minimizing, or eliminating the need for extra transmitter and receiver cards to pass traffic through a node. Yet another advantage of one or more embodiments is that optical-to-electrical-to-optical conversion is done once at the data center node, not at each node in a network or system. In this embodiment, the data center node can be physically located in a ring or virtually located in a ring. Another advantage of one or more embodiments may include a selector at the data center node operable to select signals from the shortest path, which has a higher optical signal-to-noise ratio and less tilt power.

It will be understood that the various embodiments of the present invention may include some, all, or none of the enumerated technical advantages. In addition other technical advantages of the present invention may be readily apparent to one skilled in the art from the figures, description, and claims included herein.

### BRIEF DESCRIPTION OF THE DRAWINGS

FIGURE 1 is a block diagram illustrating one embodiment of an optical ring network;
FIGURE 2 is a block diagram illustrating one embodiment of operation of the optical ring network of FIGURE 1;
FIGURE 3 is a block diagram illustrating another embodiment of an optical network;
FIGURE 4 is a block diagram illustrating yet another embodiment of an optical network;
FIGURE 5 is a block diagram illustrating one embodiment of an add/drop node of FIGURE 3 or 4;
FIGURE 6 is a block diagram illustrating another embodiment of an add/drop node of FIGURE 3 or 4;
FIGURE 7 is a block diagram illustrating yet another embodiment of an add/drop node of FIGURE 3 or 4;
FIGURE 8 is a block diagram illustrating one embodiment of multiple optical networks;
FIGURE 9 illustrates one embodiment of a method for transmitting information in an optical communication system;
FIGURE 10 illustrates another embodiment of a method for transmitting information in an optical communication system;
FIGURE 11 is a block diagram illustrating one embodiment of an optical network including a primary and a back-up data center node; and
FIGURE 12 illustrates one embodiment of a method for transmitting information in an optical communication system including a primary and a back-up data center node.

### DETAILED DESCRIPTION OF THE DRAWINGS

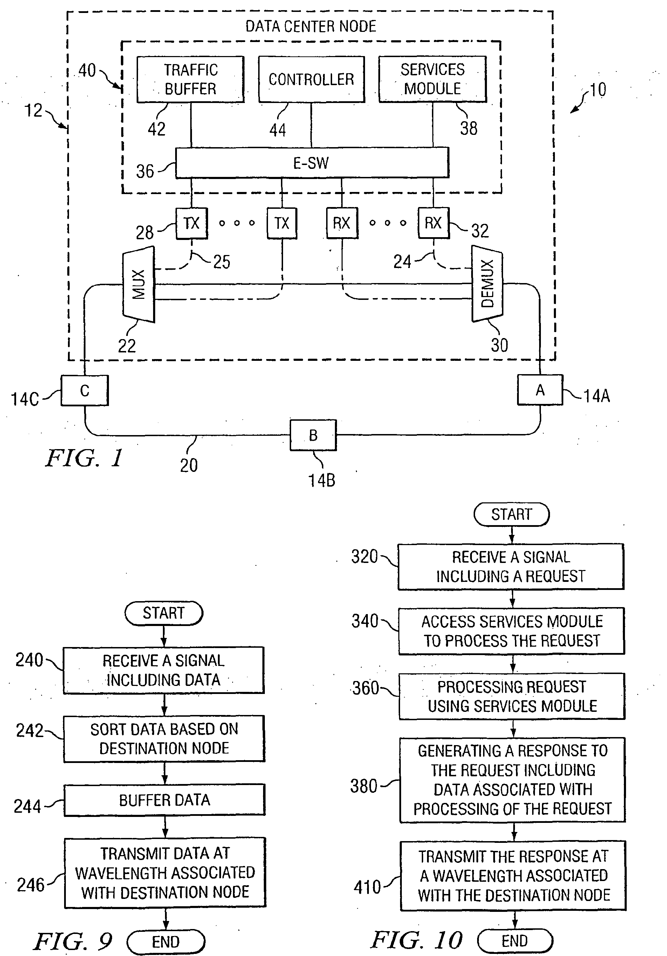

FIGURE 1 illustrates one embodiment of an optical network 10. In this embodiment, the optical network 10 is an optical ring. An optical ring may include, as appropriate, a single, uni-directional fiber, a single, bi-directional fiber, or a plurality of uni- or bi-directional fibers. In this embodiment, the network 10 is an optical network in which a number of optical channels are carried over a common path at disparate wavelengths. The network 10 may be a wavelength division multiplexing (WDM), dense wavelength division multiplexing (DWDM), or other suitable multi-channel network. The network 10 may be used in a short-haul metropolitan network, long-haul intercity network, or any other suitable network or combination of networks.

Referring to FIGURE 1, the network 10 includes a plurality of local nodes 14, an optical ring 20, and a data center node 12. In the illustrated embodiment, the ring 20 comprises a single uni-directional fiber, transporting traffic in a counterclockwise direction. The ring 20 optically connects the plurality of local nodes 14A, 14B, and 14C and the data center node 12, wherein each local node 14 may both transmit traffic to and receive traffic from other local nodes 14 via the data center node 12. The optical signals have at least one characteristic modulated to encode audio, video, textual, real-time, non-real-time and/or other suitable data. Modulation may be based on phase shift keying (PSK), intensity modulation (IM), and other suitable methodologies.

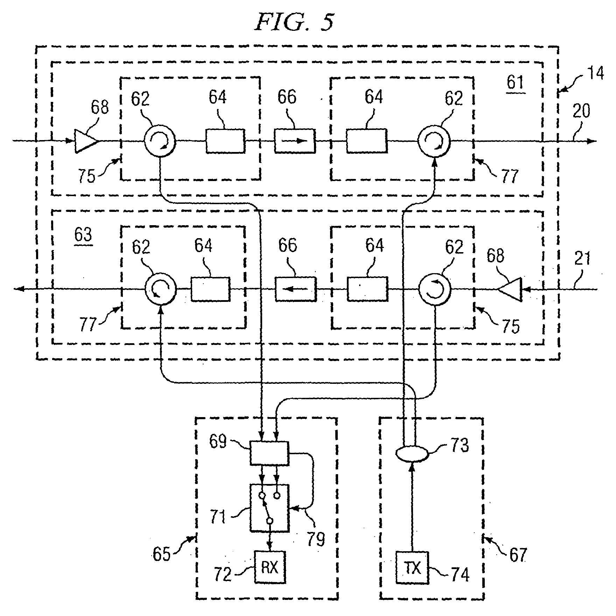

In the illustrated embodiment, the optical ring 20 is a counterclockwise ring in which traffic is transmitted in a counterclockwise direction, as mentioned above. The local nodes 14, three embodiments of which is further described in reference to FIGURES 5, 6, and 7, are each operable to add and drop traffic to and from the ring 20. In particular, each local node 14 receives traffic from local clients and adds its traffic to the optical ring 20. At the same time, each local node 14 receives traffic from the ring 20 and drops traffic destined to it. As used herein, the term "each" means every one of at least a subset of the identified items. Traffic may be added to the ring 20 by inserting the traffic channel or channels or otherwise combining signals of which at least a portion is transmitted on the ring 20. Traffic may be dropped from the ring 20 by making the traffic available for transmission to the local nodes 14. Additionally, traffic may be dropped from the ring 20 and yet continue to circulate in the ring 20. In a particular embodiment, traffic is passively added to and dropped from the ring 20 using an optical splitter or other suitable device. "Passively" in this context means the adding or dropping of channels without power, electricity, and/or moving parts. An active device would thus use power, electricity, or moving parts to perform work.

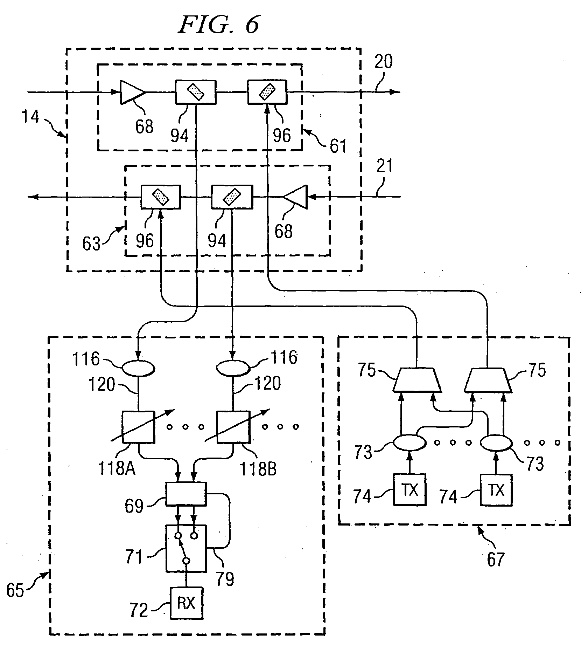

In a particular embodiment, each local node 14 is assigned a sub-band (or a portion of a sub-band) in which to add and drop its traffic. A local node, as used herein, means any network element operable to add and drop traffic from optical network 10. A sub-band, as used herein, means a portion of the bandwidth of the network comprising a subset of the channels of the network. In one embodiment, the entire bandwidth of a network may be divided into sub-bands of equal bandwidth, or, alternatively, of differing bandwidth. In one embodiment, the sub-band assigned to a local node 14 is a single wavelength disparate from wavelengths assigned to the other local nodes 14. For example, the local node 14A may be assigned a wavelength λ₁, wherein local node 14A adds and drops traffic transmitted at the wavelength λ₁ to the ring 20. Similarly, the local nodes 14B and 14C may be assigned wavelengths λ₂ and λ₃, respectively, to add and drop traffic to the ring 20. Thus, in this example, each local node 14 controls interference of channels in the network 10 by both adding and removing traffic at the assigned wavelength. It will be understood that each local node 14 may be assigned a wavelength for receiving traffic and a disparate wavelength for transmitting traffic. Furthermore, this embodiment may reduce, minimize, or eliminate the need for optical-to-electrical conversion for dropping traffic at a local node 14. In another embodiment, each local node is assigned a sub-band including two or more wavelengths in which to add and drop its local traffic. Thus, each local node controls interference of channels in the network 10 by both adding and removing traffic in its sub-band. In other embodiments, each node may be assigned a sub-band (or a portion of a sub-band) in which it is to receive traffic disparate from an assigned sub-band for adding traffic to the ring 20, as discussed in more detail in FIGURE 6.

In one embodiment, the data center node 12 includes a demultiplexer 30, a plurality of receivers 32, a data center 40, a plurality of transmitters 28, and a multiplexer 22. The demultiplexer 30 demultiplexes WDM or other multichannel signals transmitted over the optical ring 20 into constituent channels and sends each optical signal 24 to a optical receiver 32. Each optical receiver 32 optically or electrically recovers the encoded data from the corresponding traffic. As used herein, "traffic" means information transmitted, stored, or sorted in the network including any request for services as discussed in more detail below. The data is then forwarded to the data center 40. The data center 40 receives the data, sorts the data by destination node, and passes the sorted data to a transmitter 28 associated with the destination node. As used herein, a destination node is the node that is the destination for transmitted data on the ring. Each optical transmitter 28 generates an optical information signal 25 on one of a set of distinct wavelengths, λ₁, λ₂, ..., λₙ, at a certain channel spacing. For example, in a particular embodiment, channel spacing may be 100 GigaHertz (GHz) in the C-band. The channel spacing may be selected to avoid or minimize crosstalk between adjacent signals. The optical information signals 25 comprise optical signals with at least one characteristic modulated to encode audio, video, textual, real-time, non-real-time, or other suitable data. The optical information signals 25 are multiplexed into a single WDM signal by the WDM multiplexer 22 for transmission on the optical ring 20. The optical information signals 25 may be otherwise suitably combined into the WDM signal 26.

In one embodiment, the data center 40 includes an electric switch 36, a traffic buffer 42, a controller 44, and a services module 38. The electric switch 36 is coupled to the traffic buffer 42, the controller 44, and the services module 38. The electric switch 36 passes traffic received from the receivers 32 to the traffic buffer 42 and forwards traffic stored in the traffic buffer 42 to the transmitters 28. In one embodiment, the electric switch 36 is a router. The electric switch 36 may comprise an Ethernet switch, IP switch, fiber channel (FC) switch, or other suitable switches for selectively passing traffic. The traffic buffer 42 is memory operable to store inter- and intra-network traffic. The traffic buffer 42 may comprise a single memory device or multiple memory devices. It will be understood that a memory device may include hard disk drive, a random access memory, non-volatile memory, and any other suitable or combination thereof. The controller 44 is operable to send a command signal to the electrical switch 36 to facilitate the sorting of both inter- and intra-network traffic. In one embodiment, the command signal sent to the electric switch 36 includes a buffer address associated with the destination node. In this embodiment, after receiving the command signal, the electronic switch 36 passes the data to the corresponding buffer address in the traffic buffer 42. A scheduler in the controller 44 schedules data out of the queue associated with the corresponding buffer address. In one embodiment, the queue is a first-in first-out queue. It will be understood that the traffic may be otherwise sorted. The electronic switch 36 forwards the traffic stored at the buffer address to a transmitter 28 associated with the destination node. As discussed above, the transmitter 28 encodes an optical signal 25 at a wavelength assigned to the destination node disparate from wavelengths assigned to other local nodes 14.

The controller 44 controls access to the traffic buffer 42 and services module 38 and may comprise logic stored in media. The logic comprises functional instructions for carrying out programmed tasks. The media comprises computer disks, memory or other suitable computer-readable media, application specific integrated circuits (ASIC), field programmable gate arrays (FPGA), digital signal processors (DSP), or other suitable specific or general purpose processors, transmission media, or other suitable media in which logic may be encoded and utilized.

In one embodiment, the services module 38 is operable to process and generate a response to a request for a service from a node, wherein the node may be an intra- or inter-network node. It will be understood that services may include providing data, storing data, processing data, or providing other services in a network system. In one embodiment, the services module 38 is a chip (or portion of a microchip) that implements the functions of the services module 38. In another embodiment, the services module 38 is a software module that runs on a processor in a server. In yet another, the service module provides centralized storage applications such as providing data, storing data, processing data, or any other suitable storage application. As used herein, centralized means predominantly located at the central data node 12. After the electric switch 36 receives traffic including a request from a node 14, the electric switch 36 forwards the request to the services module 38. The services module 38 processes the request and generates a response. In one embodiment, the response includes a file containing audiovisual content. In another embodiment, the response includes an acknowledgement that data was received. In yet another embodiment, the response includes data processed by the services module 38. The electric switch 36 receives the response generated by the services module 38 and passes it to the address in the traffic buffer 42 associated with the destination node. The electronic switch 36 forwards the response along with other traffic stored in the queue to a transmitter 28 associated with the buffer address and thus, the destination node. The transmitter 28 encodes an optical information signal 25 at a wavelength assigned to the destination node, disparate from wavelengths assigned to other nodes 14 in the network 10.

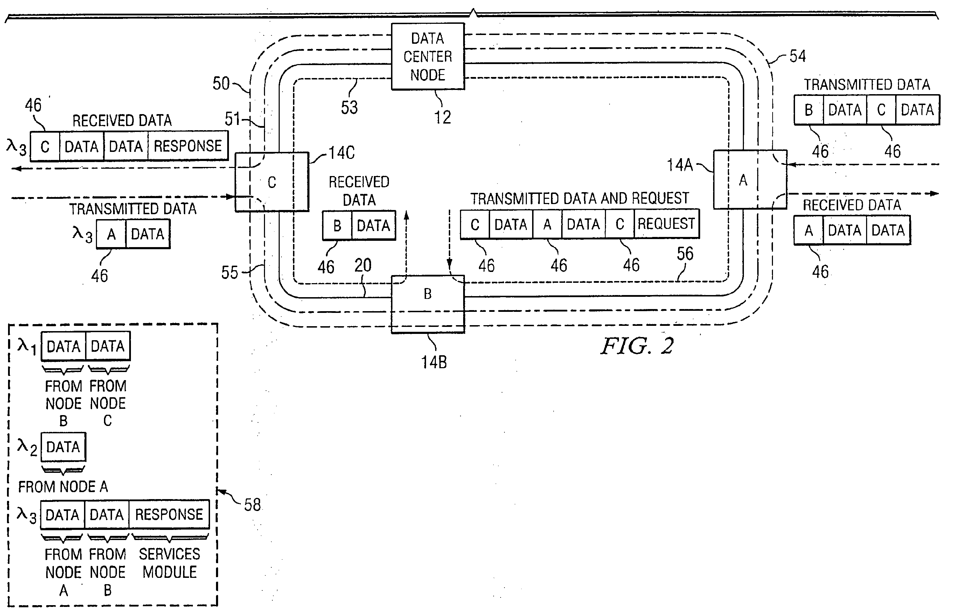

FIGURE 2 is one embodiment of the optical network 10 of FIGURE 1 in operation. The data center node 12 receives the optical signals 54 transmitted at λ₁, 56 transmitted at λ₂, and 55 transmitted at λ₃ from nodes 14A, 14B, and 14C, respectively. The data center node 12 receives the signals 54, 55, and 56 and sorts the traffic and any responses to the optical signals 54, 56, and 55 by destination node. The destination nodes are indicated by the headers or tags or labels 46. The data center node 12 generates responses, if appropriate, sorts the data and responses by destination node, and passes the sorted data and responses to a transmitter 28 associated with the destination node. The transmitters 28 encode optical signals with the data and responses at wavelengths assigned to each destination disparate from wavelengths assigned to other nodes 14. In the illustrated embodiment, optical signals 50, 53, and 51 are transmitted at wavelengths λ₁, λ₂, and λ₃, respectively, by the data center node 12 over the ring 20. The local nodes 14A, 14B, and 14C are configured to passively drop the assigned wavelengths λ₁, λ₂, and λ₃, respectively. This embodiment reduces, minimizes, or eliminates the need for optical-to-electric conversion at the nodes, which is typically required in conventional systems to determine the destination node for each data segment.

For example, the node 14A adds the optical signal 54, which is transmitted at the wavelength λ₁, to the ring 20. The optical signal 54 transmits two blocks of data whose destination nodes are the nodes 14B and 14C as indicated by the headers or tags 46. The data center node 12 receives and decodes the optical signal 54 and recovers the data including the destination node tag for each data block. The data center node 12 sorts the data by destination node. In this example, the node 14B adds the optical signal 56, which is transmitted at the wavelength λ₂, to the ring 20. The optical signal 56 transmits two blocks of data and a request whose destinations nodes are the nodes 14C, 14A, and 14C as indicated by the headers or tags 46. The last block of the optical signal 56 is a request sent by the node 14B wherein the node 14C will receive the response generated by the data center node 12. The data center node 12 receives and decodes the optical signal 56 and recovers the data and request including the destination node identification as indicated by header or tag 46. It will be understood that the header or tag 46 may be removed, so the traffic may be modified prior to being sorted or transmitted. The data center node 12 processes the request encoded in the optical signal 56 and generates a response, as discussed above. The data center node 12 sorts the data and the request by destination node. In this example, the node 14C adds the optical signal 55, which is transmitted at the wavelength λ₃, to the ring 20. The optical signal 55 transmits one block of data whose destination is the node 14A as indicated by the header or tag 46. The data center node 12 receives and decodes the optical signal 55 and recovers the data including the destination node header. The data center node 12 sorts the data by destination node. The data center node 12 transmits the received, decoded, and sorted data at wavelengths assigned to the destination node such that the destination node is configured to passively receive that assigned wavelength, which is disparate from wavelengths assigned to other nodes 14.

In one embodiment, the controller 44, illustrated in FIGURE 1, sends a command signal to the electric switch 36 including a buffer address associated with the destination node. In this embodiment, after receiving the command signal, the electric switch 36 passes the data to the corresponding buffer address in the traffic buffer 42, which is illustrated in a sorted buffer 58. The sorted buffer 58 illustrates one embodiment of sorting the data according to the buffer address. Each buffer address is associated with a transmitter 28 transmitting at a specific wavelength. The sorted buffer 58 indicates that the destination node 14A will be sent two data blocks, where one originated from the node 14B and one from the node 14C. Additionally, the sorted buffer 58 indicates that the data blocks will be forwarded to a transmitter 28 transmitting at the wavelength λ₁. In this embodiment, the sorted buffer 58 also indicates that the destination node 14B will be sent one data block, originating from node 14A. Additionally, the sorted buffer 58 indicates that the data block will be forwarded to a transmitter 28 transmitting at the wavelength λ₂. In this embodiment, the sorted buffer 58 also indicates that the destination node 14C will be sent two data block and a response, one data block from the node 14A and 14B and the response from the services module 38. Additionally, the sorted buffer 58 indicates that the blocks will be forwarded to a transmitter 28 transmitting at the wavelength λ₃. The nodes 14A, 14B, and 14C are configured to passively receive the wavelengths λ₁, λ₂, and λ₃, respectively. Thus, the traffic signals 50, 53, and 51 will be passively dropped at the local nodes 14A, 14B, and 14C, respectively. It will be understood that the illustrated nodes may comprise a fixed optical filter, a sub-band rejection filter, or other suitable drop elements operable to drop traffic signals without continuing to propagate over the ring 20.

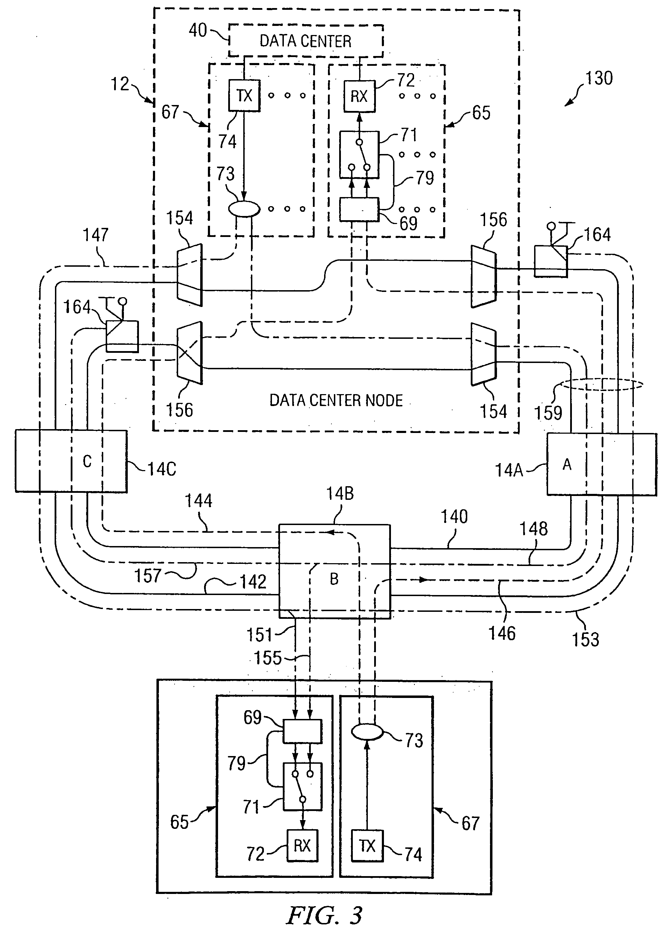

FIGURE 3 illustrates one embodiment of an optical network 130 providing Optical Unidirectional Path-Switched Ring (OUPSR) protection. In this embodiment, the network 130 is an optical network in which a number of optical channels are carried over a common path at disparate wavelengths. The network 130 may be a WDM, DWDM, or other suitable multichannel network. The network 130 may be used in a short haul metropolitan network, and long haul inter-city network or any other suitable network or combination of the networks.

Referring to FIGURE 3, the network 130 includes a plurality of nodes 14, a first optical fiber 140, and a second optical fiber 142. In this embodiment, optical signals may be transmitted in both a clockwise and counterclockwise direction around the fibers 140 and 142, respectively. Optical information signals are transmitted in different directions on the fibers 140 and 142 to provide fault tolerance. The optical signals have at least one characteristic modulated to encode audio, video, textual, real-time, non-real-time and/or other suitable data. Modulation may be based on PSK, IM and other suitable methodologies.

The nodes 14 are operable to add and drop traffic to and from the fibers 140 and 142. At each node 14, traffic received from local clients, the local node 14B illustrates one example, is added to the fibers 140 and 142, while traffic destined for local clients is dropped. Traffic may be added to the fibers 140 and 142 by inserting the traffic channels or otherwise combining signals of the channels into a transport signal of which at least a portion is transmitted on one or both fibers 140 and 142. Traffic may be dropped from the fibers 140 and 142 by making the traffic available for transmission to the local clients. In a particular embodiment, traffic is passively added to and dropped from the fibers 140 and 142. In one embodiment, traffic may be dropped and yet continue to circulate on the fibers 140 and 142. In a particular embodiment, traffic may be passively added to and/or dropped from the fibers 140 and 142 by splitting/combining, which is without multiplexing/demultiplexing, the signal in the transport rings and/or separating parts of a signal in the ring.

In a particular embodiment, each local node 14 is assigned a sub-band (or a portion of a sub-band) in which to add its traffic to the fibers 140 and 142. In one embodiment, the entire bandwidth of a network may be divided into sub-bands of equal bandwidth, or, alternatively, of differing bandwidth. In the illustrated embodiment, the sub-band assigned to a local node is two wavelengths that are disparate from wavelengths assigned to the other local nodes 14. For example, the local node 14B may be assigned a wavelengths λ₃ and λ₄ disparate from other wavelengths in the network 130, wherein local node 14B adds traffic at the wavelength λ₃ to the fibers 140 and 142 drops traffic transmitted at wavelength λ₄ from the fibers 140 and 142. Thus, in this example, the network 130 controls interference by reserving a set of wavelengths for dropping traffic disparate from a set of wavelengths for adding traffic, wherein the wavelengths in each set are disparate from other wavelengths in the network 130. Furthermore, this embodiment may reduce, minimize, or eliminate the need for optical-to-electrical conversion for dropping traffic at a local node 14.

In one embodiment, the local nodes 14 includes a transmitting element 67 and a receiving element 65. The receiving element is operable to receive, selectively switch between two signals, and decode the selected signal. The transmitting element is operable to encode an optical information signal and add two substantially similar signals to the optical fibers 140 and 142. The details of the receiving element 65 and 67 will be discussed in more detail below.

In one embodiment, the data center node 12 includes demultiplexers 156, a receiving element 65, a data center 40, a transmitting element 67, and multiplexers 154. The demultiplexers 156 demultiplexes WDM signals transmitted over the optical fibers 140 and 142 into constituent channels, typically resulting in two signals, one from each ring, associated with a single channel. The demultiplexed optical information signals are sent to the receiving element 65. The receiving element 65 selectively recovers the encoded data from the corresponding signal associated with each channel and sends the data to the data center 40. The data center 40 receives the data, sorts the data by destination node, and passes the sorted data to the transmitting element 67. The transmitting element 67 receives, encodes, and transmits the data at a wavelength that the destination node is configured to receive.

In one embodiment, the receiving elements 65 includes a plurality of selectors 69, a plurality of 2x1 switches 71, and a plurality of receivers 72. The demultiplexed channels, or dropped channels in the case of the local node 14B, are forwarded to one of the plurality of selectors 69 and corresponding switches 71, which allows selective connection of the receiver 72 with either an associated signal coming from the fiber 140 or an associated signal coming from the fiber 142. In a particular embodiment, the switch 71 is initially configured to forward to the receiver 72 from a fiber 140 or 142 that has the lower bit error rate (BER). A threshold value is established such that the switch 71 remains in its initial state as long as the BER does not exceed the threshold. Another threshold or range may be established for power levels. For example, if the BER exceeds the BER threshold or if the power falls above or below the preferred power range, the selector 69 sends a command signal to the switch 79 to switch and thus selecting the other signal. Commands for switching may be transmitted via connection 79 to the 2x1 switch 71. The use of such dual signals provides OUPSR protection or the allowance of traffic to be communicated from a first node 14 to a second node 14 over at least one of the rings 140 and 142 in the event of a line break or other damage to the other of the rings 140 and 142.

The transmitting element 67 includes a plurality of transmitters 74 and a plurality of couplers 73. In the case of the transmitting element 67 of the data center node 12, each transmitter 74 is associated with one of the nodes 14, such that the associated transmitter 74 transmits at a wavelength that the corresponding node 14 is configured to receive. In the case of the transmitting element 67 of the local node 14B, each transmitter 74 transmits at a wavelength disparate from wavelengths transmitted at other nodes. The coupler 73 splits the signal into two substantially similar signals, wherein one signal is added to the fiber 140 and the other signal is added to the fiber 142.

Total λ of the network 130 may be divided and assigned to each node 14 depending upon the local or other traffic of the nodes 14. Furthermore, the set of disparate transmitting wavelengths and the set of disparate receiving wavelengths may be disparate wavelengths for each node 14. For an embodiment in which the total number of disparate wavelengths is 80, the total number of nodes 14 is four, and the traffic is even in each node 14, 20 disparate wavelengths may be assigned to each node 14, wherein 10 disparate wavelengths are assigned as transmitting λ's and 10 disparate wavelengths are assigned as receiving λ's. If each λ is modulated by 10 gigabits per second data rate, each node can send 100 gigabits per second (10 gigabits per second times 10 λ) to all other nodes in the network 130. For a WDM system, the λ may be between 1,530 nanometers and 1,565 nanometers. In one embodiment, the channel spacing over the C-band may be 50 GHz between transmitting and receiving λ for each node 14 and thus 100 GHz between receiving λ's and 100 GHz between transmitting λ's or .8 nanometers.

In operation, the node 14B adds the same or substantially the same traffic signals 144 and 146 to the fibers 140 and 142, respectively. In the illustrated embodiment, the traffic signals 144 and 146 are transmitted at the assigned wavelength λ₃. The optical beam splitter 73 splits a beam into the same or substantially the same traffic signals 144 and 146. The traffic signal 146 is a counterclockwise traffic signal along optical fiber 142, and the traffic signal 144 is a clockwise traffic signal along the optical fiber 140. Both signals are received by the data center node 12. The data center node 12 demultiplexes the clockwise and counterclockwise signals into constituent channels resulting in two signals, one from each ring, associated with each channel. Both signals are forwarded to the receiving element 65 of the data center node 12, which selectively passes traffic associated with each channel as discussed above. The decoded data is passed to the data center 40, which receives the data, provides responses to any requests, sorts the data and responses by destination node, and passes the data to the transmitting element 67. In one embodiment, request are addressed to the data center node 12. The transmitting element 67 receives, encodes, and transmits the sorted traffic at a wavelength that the destination node is configured to receive. For example, the destination the node 14B is assigned a wavelength λ₄ for receiving traffic. The transmitting element 67 transmits encoded data for the node 14B in the optical signal 148 at the wavelength λ₄ and propagating in the clockwise direction over fiber 140 and the optical signal 147 at the wavelength λ₄ and propagating in the counterclockwise direction 142. The traffic signal 147 is propagated in the counterclockwise direction along the optical fiber 142 until received by the node 14B, at which point the signal is split into a drop signal 151 and a pass-through signal 153. The drop signal 151 is passed through the node 14B to the receiving element 65 of the local node 14B, while the pass-through signal 153 continues to propagate over the fiber 142 until terminated at an interleaver 164 on optical fiber 142. In one embodiment, the node 14B does not split the optical signal 147, but uses a sub-band rejection filter to drop the optical signal 147 to the receiving element 65. The traffic signal 148 is propagated in the clockwise direction along the optical fiber 140 until received by the node 14B, at which point the signal is split into a drop signal 155 and a pass-through signal 157. The drop signal 155 is passed through node 14B to the receiving element 65, while the pass-through signal 157 continues to propagate over the fiber 140 until terminated at an interleaver 164 on optical fiber 140. In one embodiment, the node 14B does not split the optical signal 148, but uses a sub-band rejection filter to drop the optical signal 148 to the receiving element 65. The receiving element 65 selectively passes encoded data, as discussed in more detail below. If a fault is detected in the dropped signal, then OUPSR protection is implemented by the network.

For example, once a fault such as the fault 159 is detected between data center node 12 and node 14A, the receiving element 65 of the data center node 12 selectively connects the receiver 72 of the data center node 12 to the fiber 140. The signal is transmitted in a clockwise direction over the protection path from the node 14B to the data center node 12. The center node 40 receives the signal transmitted over the protection path at receiving element 65 of the data center node 12. The switch 71 of the data center node 12 passes the protected signal to the receiver 72, which receives and decodes the signal. The data center 40 recovers and sorts the data by the destination node. The sorted data is passed to the transmitting element 67 and transmits the optical signal 147 at the wavelength assigned to the node 14B propagating in the counterclockwise direction over fiber 142. The node 14B drops the transmitted signal 151 and 155 to the receiving element 65.

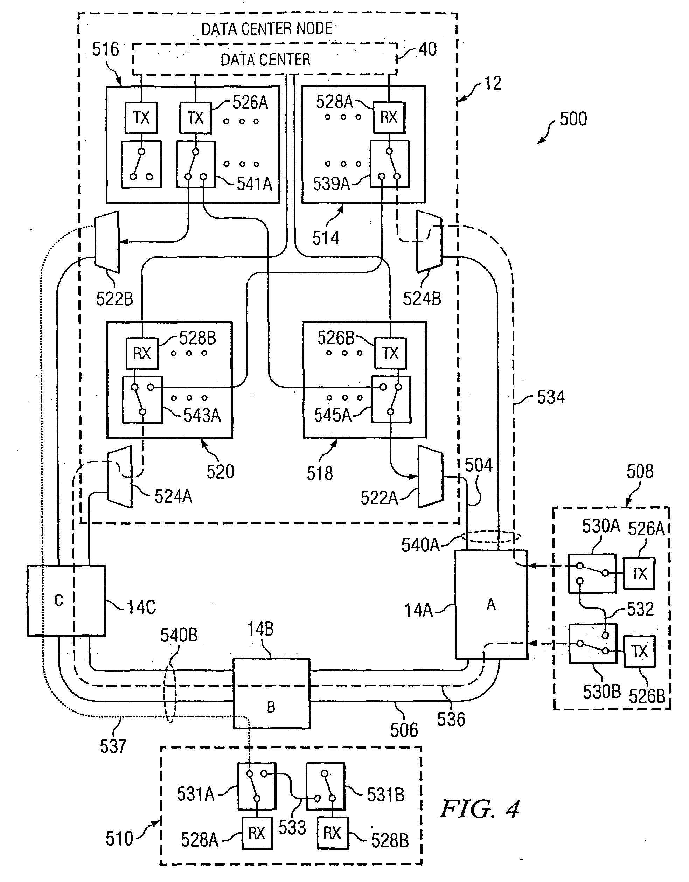

FIGURE 4 illustrates one embodiment of an optical network 500. In this embodiment, the network 500 is an optical network in which a number of optical signals are carried over a common path at disparate wavelengths. The example optical signals, as shown in the figure, illustrate an implementation of an optical shared path protection ring (OSPPR). In FIGURE 4, the optical network 500 includes a plurality of nodes 14, a first optical fiber 504, a second optical fiber 506, and a data center node 12. Optical information signals are transmitted in different directions on the fibers 504 and 506 to provide fault tolerance. The optical signals have at least one characteristic modulated to encode audio, video, textual, real-time, and/or other suitable data. Modulation may be based on PSK, IM and other suitable methodologies.

In the illustrated embodiment, several traffic streams are shown. Some of these streams comprise preemptable signals (or protection channel access (PCA) streams) and protected (or work) signals. Preemptable signals are signals that are terminated to provide protection to other signals. Protected signals are signals for which protection is provided. In the event of a line cut or other interruption causing a protection stream not to reach its destination nodes, one or more preemptable streams may be terminated to allow the protected traffic to be transmitted instead of the preemptable stream. After the pre-emption has been repaired, the network may revert to its pre-emption state. In one embodiment, the protection-switchable traffic may comprise higher-priority traffic than the preemptable traffic; however, it will be understood that other divisions of the traffic streams into protected and to preemptable portions may be suitable or desirable in other embodiments.

The nodes 14 are operable to add and drop traffic to and from the fibers 504 and 506. At each node 14, traffic received from local clients is added to the rings 504 and 506, while traffic destined for local clients is dropped. Traffic may be added to the fibers 504 and 506 by inserting the traffic channels or otherwise combining signals of the channels into a transport signal of which at least a portion is transmitted on one or both fibers 504 and 506. Traffic may be dropped from the fibers 504 and 506 by making the traffic available for transmission to the local clients. In a particular embodiment, traffic is passively added to and dropped from the fibers 504 and 506. In one embodiment, traffic may be dropped and yet continue to circulate on the fibers 504 and 506. In a particular embodiment, traffic may be passively added to and/or dropped from the fibers 504 and 506 by splitting/combining, which is without multiplexing/demultiplexing, a signal in the transport rings and/or separating parts of a signal in the ring.

In a particular embodiment, each local node 14 is assigned a sub-band (or a portion of a sub-band) in which to add its traffic from a transmitting element 508 and drop traffic to a receiving element 510. It will be understood that all nodes 14 have an associated transmitting element 508 and receiving element 510, even though FIGURE 4 only illustrates the transmitting element 508 associated with node 14A and the receiving element 510 associated with node 14B. In one embodiment, the entire bandwidth of a network may be divided into sub-bands of equal bandwidth, or, alternatively, of differing bandwidth. In one embodiment, the sub-band assigned to a local node 14 is a single wavelength that are disparate from wavelengths assigned to the other local nodes 14. For example, the local node 14A may be assigned a wavelength λ₁, wherein local node 14A adds and drops traffic transmitted at the wavelength λ₁ to the fiber 504 and 506. Similarly, the local nodes 14B and 14C may be assigned wavelengths λ₂ and λ₃, respectively, to add and drop traffic to the fiber 504 and 506. Thus, in this example, each local node 14 controls interference of channels in the network 500 by both adding and removing traffic at the assigned wavelength. Furthermore, this embodiment may reduce, minimize, or eliminate the need for optical-to-electrical conversion for pass-through traffic at a local node 14. In another embodiment, each local node is assigned a sub-band including two or more wavelengths in which to add and drop its local traffic. Thus, each local node controls interference of channels in the network 500 by both adding and removing traffic in its sub-band. In other embodiments, each node may be assigned a sub-band (or a portion of a sub-band) in which it is to receive traffic disparate from an assigned sub-band for adding traffic to the ring 20, as discussed in more detail in FIGURE 6.

In one embodiment, the transmitting element 508 includes a plurality of transmitters 526 and a plurality of 2x1 switches 530. The transmitter 526A encodes a protected traffic signal and transmitter 526B encodes a preemptable traffic signal. The switches 530 selectively connect the protected traffic signal between the rings 506 and 504 and are operable to terminate the preemptable signal 536. The switch 530A has one input for receiving the protected signal from the transmitter 526A that transmits the protected signal. The switch 530A has two outputs, wherein one output is coupled to the fiber 506 and passes the protected signal to the fiber 506 during normal operation. The second output of the switch 530A is connected to a second input of the switch 530B via the connection 532. The first input of the switch 530B is connected to the preemptable transmitter 526B, which pass the preemptable signal to fiber 504 during normal operation. In the case of a fault 540, the switches 530 switch such that the preemptive transmitter 526B is connected to an open pole and thus terminates the preemptable traffic. Additionally, the protected signal is forwarded by the switch 530A to the switch 530B via the connection 532. The protected signal then passes to the optical fiber 504 to the data center node 12.

In the illustrated embodiment, the receiving element 510 comprises a plurality of 1x2 switches 531 and a plurality of receivers 528, which allows selective connection of the receiver 528A with either an associated drop signal coming from the fiber 504 or an associated drop signal coming from the fiber 506. In a particular embodiment, the switch 531A is initially configured to forward protected signals to the receiver 528A from the fiber 506, and the switch 531B is initially configured to forward preemptable signals to the receiver 528B from the fiber 504. The switch 531A has two inputs and one output, where the output is connected the receiver 528A for receiving protected signals. The first input of the switch 531 A is connected to the fiber 506 and passes the protected signal transmitted over the fiber 506 to the receiver 528A. The second input of the switch 531A is connected to the first output of the switch 531B and passes protected signals from fiber 504 to the receiver 528A when a fault is detected such as 540B. The switch 531B has one input and two outputs, where the input of switch 531B is connected to the fiber 504 and is operable to drop preemptable traffic from the fiber 504 to the preemptable receiver 528B. The first output of the switch 531B is connected to the second input of the switch 531A via the connection 533 and passes protected signals from the fiber 504 to the receiver 528A when a fault is detected. The second output of the switch 531B is connected to the preemptable receiver 528B and passes preemptable receiving traffic from the fiber 504 to the preemptable receiver 528B during normal operation.

In one embodiment, the data center node 12 includes demultiplexers 524, multiplexers 522, a preemptable receiving element 520, a protected receiving element 514, a preemptable transmitting element 518, a protected transmitting element 516, and a data center 40. The demultiplexers 524 demultiplexes WDM signals transmitted over the optical fibers 504 and 506 into constituent channels. The preemptable demultiplexed optical signals are sent to the receiving element 520. The protected demultiplexed optical signals are sent to the receiving element 514. The preemptable receiving element 520 is operable to forward the preemptable traffic to the data center 40 or pass protected traffic transmitted over an protection path to the protected receiving element 514. The protected receiving element 514 selectively connects a working path and a protection path depending on the detection of a fault in the working path such as the fault 540A. The preemptable transmitting element 518 is operable to transmit preemptable traffic over a protection path. The protected transmitting element 516 selectively connects the working path or the protection path of the transmitted signal from the data center node 12 to the destination node. The data center 40 receives the data, sorts the data by destination node, and passes the sorted data to either transmitting element 514 or 518 depending whether the signal is protected or preemptable traffic.

In one embodiment, the protected receiving element 514 includes a plurality of receivers 528 and a plurality of switches 539. The switch 539A has two inputs and one output, where the output is connected to the protected receiver 528A. The first input of the switch 539A is connected to the second output of the switch 543A of the preemptable receiving element 520. The second input of the switch 539A is connected to the working path of a protected signal and passes the protected signal to the receiver 528A from the working path of the originating node.

In one embodiment, the preemptable receiving element 520 includes a plurality of receivers 528B and a plurality of switches 543. The switches have one input and two outputs, wherein in the input of the switch 543A is connected to the protection path of the associated node and forwards preemptable traffic to the receiver 528B during normal operation. The first output of the switch 543A is connected to the receiver 528B, and the second output of the switch 543A is coupled to the first input on the switch 539A in the protected receiving element 514. If a fault is detected such as 540A, the protected traffic transmitted over the protection path is forwarded to the protected receiving element 514.

In one embodiment, the protected transmitting element 516 includes a plurality of transmitters 526 and a plurality of switches 541. Each switch 541 has one input and two outputs, where the input is coupled to the protected transmitter 526. The first output of the switch 541A is coupled to the working path of the destination node, and the second output of the switch 541A is coupled to the first input of the switch 545A of the preemptable transmitter 518.

In one embodiment, the preemptable transmitting element 518 includes a plurality of transmitters 526 and a plurality of switches 545. The switches 545A includes two inputs and one output, where the output is coupled to the protection path of the destination node. The first input of the switch 545A is coupled to the second output of the switch 541A of the protected transmitting element 516. The second input of the switch 545A is connected to the preemptable transmitter 526B. During normal operation, the switch 545A of the preemptable transmission element 518 forwards the preemptable traffic to the protection path of the destination node. If a fault is detected, the switch 541 switches and passes the protected traffic along the protection path of the optical fiber 504 (or the protection path of the destination node).

Referring now to FIGURE 4, during normal operation, protected traffic stream 534 is transmitted in counterclockwise direction over the fiber 506 to the data center node 12. Traffic stream 534 is a counterclockwise stream originating from node 14A and destined to the node 14B via the data center node 12. The data center node 12 receives the traffic stream 534, decodes the traffic stream 534, sorts the encoded data by the destination node and by level of priority, and transmits the sorted data in a protected traffic stream at the wavelength assigned to the destination node. In the illustrated embodiment, the protected traffic stream 537 is a counterclockwise stream originating from the data center node 12 and destined for the node 14B. In the illustrated embodiment, each node 14 is assigned a wavelength disparate from wavelengths assigned to the other nodes 14 for transmitting and receiving optical information signals. For example, the node 14A is assigned the wavelength λ₁, wherein it transmits a protected signal 534 and a preemptable signal 536 at the wavelength λ₁ and receives both protected and preemptable traffic at the wavelength λ₁. The preemptable signal 536 is a clockwise stream originating from the node 14A and destined for the data center node 12 over the fiber 504. As discussed in more detail below, the stream 536 may be interrupted during protection switching to protect a higher-priority stream. The node 14B is assigned the wavelength λ₂ to receive and transmit optical signals.

Once a fault such as the fault 540A is detected along the work path, the transmitting element 508 selectively connects the protected transmitter 526A to the fiber 504. Additionally, the switch 530B breaks the connection from the fiber 504 to the preemptable transmitting 526B and terminates the preemptable signal. The protected signal is transmitted in a clockwise direction over the protected path from the node 14A to the data center node 12 over fiber 504. The center node 502 receives the protected signal transmitted over the protection at the preemptable receiving element 520. The switch 543A of the preemptable receiving element 520 passes the protected signal to the protected receiving element 514. The switch 539A passes the protected signal to the receiver 528A, which receives and decodes the signal. The data center 40 recovers and sorts the data by the destination node. The sorted data is passed to the protected transmitting element 516 and transmitted at the wavelength assigned to the node 14B. The node 14B drops the protected signal 537 to the receiving element 510.

Although traffic in a single wavelength is illustrated, it will be understood that protected traffic and preemptable traffic are transmitted in numerous other wavelengths/channels in the fibers 504 and 506. Furthermore, although protected traffic is illustrated as being transmitted in the same wavelength as preemptable traffic (although on a different ring), numerous other traffic may be implemented. As an example only, work traffic may be transmitted on the fiber 506 in odd number channels and even numbered channels on fiber 504. Preemptable traffic may be transmitted in the fiber 506 in even number channels and in odd number channels on the fiber 504. As another example, each node may be assigned a sub-band disparate from other sub-bands assigned to other nodes for receiving traffic and a sub-band disparate from sub-bands assigned to other nodes for transmitting traffic.

FIGURE 5 illustrates one embodiment of an add/drop node 14. In the illustrated node 14, traffic is passively dropped from fibers 20 and 21. In particular, the illustrated embodiment uses fixed optical filters to reflect (drop) a wavelength assigned to node 14, with the remaining wavelengths passing through the node 14. As described below, local traffic may be added to the fibers 20 and 21 at the assigned wavelength.

Referring to FIGURE 5, the node 14 comprises a first, or counterclockwise transport element 61, and a second, or clockwise transport element 63. The node may comprise a transmitting element 67 and a receiving element 65. In the illustrated embodiment, the transmitting element 67 and the receiving element 65 are separate from the node 14. The transport element 61 and 63 add and drop traffic to and from the fibers 20 and 21, remove previously transmitted traffic, and/or provide other interaction of the node 14 with the fibers 20 and 21. The transmitting element 67 generates local add signals to be added to the fibers 20 and 21 by transport elements 61 and 63, respectively. The receiving element 65 receives local drop signals dropped from the fibers 20 and 21 by the transport elements 61 and 63, respectively. In particular embodiments, the transport, transmitting, and receiving elements 61, 63, 67, and 65 may each be implemented as a discrete card and interconnected through a back plane of a card of the node 14. Alternatively, the functionality of one or more elements 61, 63, 65, and 67 may be distributed across a plurality of discrete cards. In this way, node 14 is modular, upgradeable, and provides a "pay-as-you-grow" architecture. The components of node 14 may be coupled by direct, indirect, or other suitable connection or association. In the illustrated embodiment, the elements 61, 63, 65, and 67 and devices in the elements are connected with optical fiber connections, however, other embodiments may be implemented in part or otherwise with planar waveguide circuits and/or free space optics.

In one embodiment, each transport element 61 and 63 of the node 14 comprises an amplifier 68, a drop element 75, an isolator 66, and an add element 77. The drop element 75 is operable to reject (drop) a wavelength of the network assigned to the node 14 from the optical information signal and to pass-through the remaining signal including a plurality of disparate wavelengths of the network. In addition, the add element 77 is operable to receive add signals transmitted at the assigned wavelength by the transmitting element 67 and to combine both the wavelength assigned to the node 14 and the pass-through signal. The amplifiers 68 increase the strength or boost the optical information signal resulting from losses due to transmission over the fibers 20 and 21. The isolators 66 reduce, minimize, or eliminate optical feedback along the fibers 20 and 21.

Each add element 77 and drop element 75 comprise a circulator 62 and a fixed optical filter 64. The filter 64, as described in further detail below, is operable to reject traffic at an assigned wavelength and to pass the remaining traffic. In one embodiment, the fixed optical filter includes a fixed fiber Bragg grating. The term reject as used herein may mean dropping, terminating, or otherwise removing traffic from the main optical signal on a fiber 20 or 21. Each filter 64 may comprise a single filter or a plurality of filters connected serially, in parallel, or otherwise.

The amplifiers 68 may comprise an Erbium-doped fiber amplifiers (EDFAs) or other suitable amplifiers capable of receiving and amplifying an optical signal. To reduce the optical power variations in clockwise fiber 21 and in counterclockwise fiber 20, the amplifiers 68 may use an automatic level control (ALC) function with wide input dynamic-range. Hence, the amplifiers 68 may deploy automatic gain control (AGC) to realize gain-flatness against input power variation, as well as variable optical attenuators (VOAs) to realize ALC function.

During operation of the node 14, the amplifiers 68 of each transport element 61 and 63 receive an transport signal from the connected fiber 20 or 21 and amplifies the signal. The amplified signal is forwarded to the drop element 75. The drop element 75 rejects (drops) an assigned wavelength of the traffic signal. The remaining, non-rejected signal forms a pass through signal that is forwarded to the add element 77. The rejected wavelength is forwarded from the drop element 75 to the receiving element 65, which selectively passes input signals to a receiver 72.

In the illustrated embodiment, the drop element 75 receives an optical traffic signal and drops the signal from the drop element 75 to the receiving element 65. In one embodiment, the drop element 75 comprises a fixed optical filter 64 and a circulator 62. The fixed optical filter 64 receives the traffic signal and reflects a wavelength of the traffic signal assigned to the node 14 such that the transmitted signal counter propagates along the fiber 20 or 21 to the circulator 62. The circulator 62 receives the reflected wavelength assigned to the node 14 and passes (routes/drops) the assigned wavelength to the receiving element 65.

In the illustrated embodiment, the receiving element comprises a selector 69, a 2x1 switch 71, and a receiver 72. Each drop signal is connected to a selector 69 and switch 71, which allows selective connection of the receiver 72 with either an associated drop signal coming from the ring 20 or an associated drop signal coming from the ring 21. Such selective switching may be used to implement Optical Unidirectional Path-Switched Ring (OUPSR) protection switching. In a particular embodiment, the selector 69 is initially configured to forward to the receiver 72 traffic from a fiber 20 or 21 that has the lower bit error rate (BER). A threshold value is established such that the switch remains in its initial state as long as the BER does not exceed the threshold. Another threshold or range may be established for different power levels. For example, if the BER exceeds the BER threshold or if the power falls above or below the preferred power range, the switch selects the other signal. Commands for switching may be transmitted via connection 79. This results in control of switching and simple and fast protection.

In the illustrated embodiment, the transmitting element 67 comprises a beam splitter 73 and a transmitter 74 that transmits at a wavelength assigned to the node 14. The optical beam splitter 73 splits the beam and forwards the signals to the add elements 77, for addition to the associated fiber 20 or 21, as described above. In the illustrated embodiment, the add elements 77 receive an add signal from the transmitting element 67 and combine the add signal to the pass-through signal. In one embodiment, the add elements 77 comprise a fixed optical filter 64 and a circulator 62. The circulator 62 passes the add signal at the assigned wavelength from the transmitting element 67 and forwards the signal to the fixed optical filter 64, such that the transmitted signal counter propagates along fiber 20 or 21 to the fixed optical filter 64. The fixed optical filter 64 reflects that wavelength assigned to the node 14 and adds the assigned wavelength to the pass-through signal. The isolator 66 prevents upstream feedback.

In the illustrated embodiment, the same or substantially the same signals are communicated over both fibers 20 and 21. Therefore, a single set of receivers may be used to receive signals from fibers 20 or 21 (one or the other are received, depending on the position of switch 71 and selector 69), the same set of transmitters may be used to transmit the signals to both fibers 20 and 21. Such a configuration is appropriate when providing OUPSR protection. However in other embodiments, the node 14 may include a separate set of receivers associated with each of the fibers 20 and 21, and a separate set of transmitters associated with each of the fibers 20 and 21. In this case, no switch 71 and selector 69 are needed. Instead, the drop signals associated with each fiber 20 or 21 are coupled to the set of receivers associated with each ring. Therefore, different signals may be received from the fibers 20 and 21.

Similarly, instead of splitting the signal from a set of transmitters using a beam splitter 73 and providing the signals to both fibers 20 and 21, a different signal may be generated by the set of transmitters associated with fiber 20 and the set of transmitters associated with fiber 21. Therefore, different signals may be communicated over each fiber 20 and 21. For example, a first signal can be added in a particular channel on fiber 20 at node 14, and an entirely different signal can be added in the same channel on fiber 21 by the same node 14.

FIGURE 6 illustrates one embodiment of an add/drop node 14. In the illustrated node 14, traffic is passively dropped from fiber 20 and 21. In particular, the illustrated embodiment uses filters to reject a portion of a sub-band of the network assigned to the node 14, with the remaining sub-bands passing through the node 14. As described below, local traffic may be added to the fibers 20 and 21 in the assigned portion of the sub-band.

Referring to FIGURE 6, the node 14 comprises a first, or counterclockwise transport element 61, a second, or clockwise transport element 63. The node 14 may comprise the transmitting element 67 and the receiving element 65. In the illustrated embodiment, the transmitting element 67 and the receiving element 65 are separate from the node 14. The transport elements 61 and 63 add and drop traffic to and from the fibers 20 and 21, remove previously transmitted traffic, and/or provide other interaction of the node 14 with the fibers 20 and 21. The transmitting element 67 generates local add signals to be added to the fibers 20 and 21 by the transport elements 61 and 63. The receiving element 65 receives local drop signals dropped from the fiber 20 and 21 by transport elements 61 and 63. In particular embodiments, the transport, transmitting, and receiving elements 61, 63, 67, and 65 may each be implemented as a discrete card and interconnected through a backplane of a card shelf of the node 14. Alternatively, the functionality of one or more elements 61, 63, 67, and 65 may be distributed across a plurality of discrete cards. In this way, the node 14 is modular, upgradeable, and provides a "pay-as-you-grow" architecture. The components of the node 14 may be coupled by direct, indirect or other suitable connection or association. In the illustrated embodiment, the elements 61, 63, 67, and 65 and devices in the elements are connected with optical fiber connections, however, other embodiments may be implemented in part or otherwise with planar waveguide circuits and/or free space optics.

In one embodiment, the transport elements 61 and 63 each comprise a sub-band rejection filter 94 operable to reject a sub-band of the network assigned to the node 14 from the traffic signal and to pass-through the remaining signal including a plurality of disparate sub-bands of the network. In addition, the transport elements 61 and 63 each comprise an add element 96 operable to receive add signals at the assigned sub-band and to combine both the assigned sub-band generated at the transmitting element 67 and the pass-through signal.

The filters 94 are operable to reject traffic in an assigned sub-band, and to pass the remaining traffic. The term "reject" as used herein may mean dropping, terminating, or otherwise removing traffic from the main optical signal on a ring 20 or 21. The filters 94 may comprise a thin-film, fixed filters, tunable filters, or other suitable filters, and each filter 94 may comprise a single filter or a plurality of filters connected serially, in parallel, or otherwise.

In one embodiment, the transport elements 61 and 63 may include amplifiers 68. The amplifiers 68 may be EDFAs or other suitable amplifiers capable of receiving and amplifying an optical signal. To reduce the optical power variations of the clockwise fiber 21 and of the counterclockwise fiber 20, the amplifiers 68 may use an ALC function with wide input dynamic-range. Hence, the amplifiers 68 may deploy AGC to realize gain-flatness against input power variation, as well as VOAs to realize ALC function.

During operation of node 14, the amplifier 68 of each transport element 61 and 63 receive an transport signal from the connected fiber 20 or 21 and amplifies the signal. The amplified signal is forwarded to the filter 94. The filter 94 rejects (drops) an assigned sub-band of the traffic signal. The remaining, non-rejected signal forms a pass-through signal that is forwarded to the add element 96. The local drop signal is forwarded from the filter 94 to receiving element 65, which filters out optical signals in the assigned sub-band and selectively passes the input signals to a receiver 72.

In the illustrated embodiment, the receiving element includes two 1xn couplers 116, a plurality of tunable (or fixed) filters 118, a plurality of selectors 69, a plurality of 2x1 switches 71, and a plurality of receivers 72. The 1xn couplers 116 may comprise one optical fiber lead and a plurality of optical fiber leads which serve as drop leads 120. The drop leads 120 may be connected to the plurality of tunable filters 118 and operable to pass a selected wavelength and reject other wavelengths. The selected wavelengths from 118A and 118B are passed to the selector 69 and switch 71, which allows selective connection of the receiver 72 with either an associated drop signal coming from the ring 20 or an associated drop signal coming from the ring 21. Such selective switching may be used to implement OUPSR protection switching. In a particular embodiment, the selector 69 is initially configured to forward to the local client(s) traffic from a fiber 20 or 21 that has the lower bit error rate (BER). A threshold value is established such that the switch remains in its initial state as long as the BER does not exceed the threshold. Another threshold or range may be established for power levels. For example, if the BER exceeds the BER threshold or if the power falls above or below the preferred power range, the switch selects the other signal. Commands for switching may be transmitted via connection 79. This results in local control of switching and simple and fast protection.

In the illustrated embodiment, the transmitting element 67 comprises a plurality of beam splitter 73, a plurality of multiplexers 75 and a plurality of transmitters 74 that transmit within a sub-band assigned to the node 14. Each transmitter 74 transmits at a wavelength within the assigned sub-band, and each transmitting wavelength is disparate from other transmitting wavelengths. The multiplexer can be a WDM multiplexer based on a thin film filter (TFF), a 1xn coupler or any other suitable multiplexer. The optical splitter 73 splits the beam and forwards the signals to multiplexers 75. Each multiplexer 75 multiplexes the received signals and passes the multiplexed signal to the add filters 96 for addition to the associated fiber 20 or 21, as described above. The filter 96 rejects (adds) signal transmitted at the assigned sub-band and combines the pass through signal with the signal transmitted at the assigned sub-band by the transmitting element 67.

In the illustrated embodiment, the same or substantially the same signals are communicated over both the fibers 20 and 21. Therefore, a single set of the receivers 72 for each wavelength may be used to receive signals from the fibers 20 or 21 (one or the other are received, depending on the position of the switch 71 and selector 69), the same set of the transmitters 74 for each wavelength may be used to transmit the same signals to both the fibers 20 and 21. Such a configuration is appropriate when providing OUPSR protection. However, in other embodiments, the node 14 may include a separate set of the receivers 72 associated with each of the fibers 20 and 21, and a separate set of the transmitters 74 associated with each of the fibers 20 and 21. In this case, no switch 71 and selector 69 are needed. Instead, the drop signals associated with each the fiber 20 or 21 are coupled to the set of the receivers 72 associated with each ring. Therefore, different signals may be received from the fibers 20 and 21.

Similarly, instead of splitting the signal from a set of the transmitters 74 using a splitter 73 and providing this signal to both the fibers 20 and 21, a different signal my be generated by the set of the transmitters 74 associated with the fiber 20 and the set of the transmitters 74 associated with the fiber 21. Therefore, different signals may be communicated over each fiber 20 and 21. For example, a first signal can be added in a particular channel on the fiber 20 at a the node 14, and an entirely different signal can be added in the same channel on the fiber 21 by the same node 14.

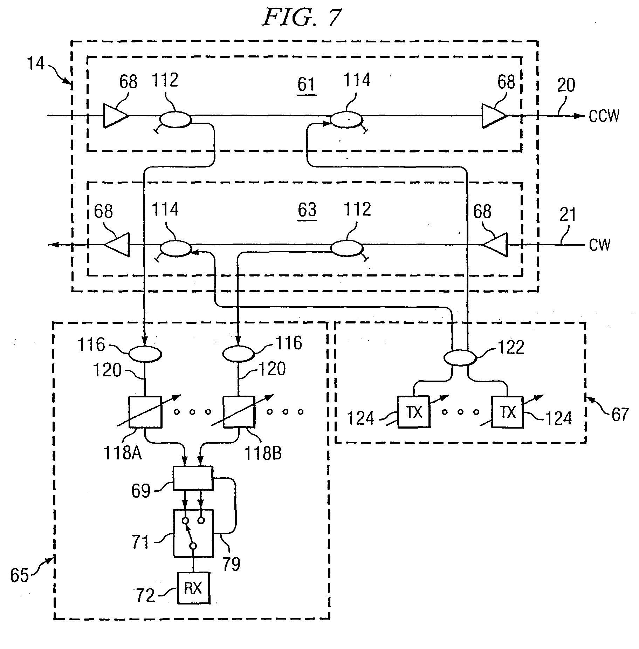

FIGURE 7 illustrates one embodiment of an add/drop node 14. In the illustrated node 14, traffic is passively dropped from fiber 20 and 21. In particular, the illustrated embodiment uses couplers and a receiving element 65 to extract wavelengths assigned to node 14. As described below, local traffic may be added to the fibers 20 and 21.

Referring to FIGURE 7, the node 14 comprises a first, or counterclockwise transport element 61, a second, or clockwise transport element 63. The node 14 may comprise the transmitting element 67 and the receiving element 65. In the illustrated embodiment, the transmitting element 67 and the receiving element 65 are separate from the node 14. The transport elements 61 and 63 add and drop traffic to and from the fibers 20 and 21, remove previously transmitted traffic, and/or provide other interaction of the node 14 with the fibers 20 and 21. The transmitting element 67 generates local add signals to be added to the fibers 20 and 21 by the transport elements 61 and 63. The receiving element 65 receives local drop signals dropped from the fibers 20 and 21 by transport elements 61 and 63. In particular embodiments, the transport, transmitting, and receiving elements 61, 63, 67, and 65 may each be implemented as a discrete card and interconnected through a backplane of a card shelf of the node 14. Alternatively, the functionality of one or more elements 61, 63, 67, and 65 may be distributed across a plurality of discrete cards. In this way, the node 14 is modular, upgradeable, and provides a "pay-as-you-grow" architecture. The components of node 14 may be coupled by direct, indirect or other suitable connection or association. In the illustrated embodiment, the elements 61, 63, 67, and 65 and devices in the elements are connected with optical fiber connections, however, other embodiments may be implemented in part or otherwise with planar wave guide circuits and/or free space optics.

In one embodiment, the transport elements 61 and 63 each comprise amplifiers 68, a drop coupler 112, and an add coupler 114. The amplifiers 68 amplifies the optical signals. The drop coupler 112 is operable to split the optical signal into a drop signal and a pass-through signal, wherein both signals are substantially the same. In addition, the transport elements 61 and 63 each comprise an add coupler 114 operable to add/combine the pass-through signal and the signals generated by the transmitting element 67.

The add coupler 114 may each comprise an optical fiber coupler or other optical splitter operable to combine and/or split an optical signal. As used herein, an optical splitter or an optical coupler is any device operable to combine or otherwise generate a combined optical signal based on two or more optical signals and/or to split or divide an optical signal into discrete optical signals or otherwise passively discrete optical signals based on the optical signal. The discrete signals may be similar or identical in frequency, form, and/or content. For example, the discrete signals may be identical in content and identical or substantially similar in power, may be identical in content and differ substantially in power, or may differ slightly or otherwise in content. In one embodiment, each coupler 112 may split the signal into two copies with substantially different power.

The amplifiers 68 may be EDFAs or other suitable amplifiers capable of receiving and amplifying an optical signal. To reduce the optical power variations of the clockwise ring 21 and of the counterclockwise ring 20, the amplifiers 68 may use an ALC function with wide input dynamic-range. Hence the amplifiers 68 may deploy AGC to realize gain-flatness against input power variation, as well as VOAs to realize ALC function.

During operation of node 14, the amplifier 68 of each transport element 61 and 63 receives an signal from the connected fiber 20 or 21 and amplifies the signal. The amplified signal is forwarded to the drop coupler 112. The drop coupler 112 splits the signal into a pass-through signal and a drop signal. The drop signal includes at least a subset of the set of wavelengths assigned to the node 14. The pass-through signal is forwarded to the add coupler 114. The local drop signal is forwarded from the drop coupler 112 to receiving element 65, which selectively passes the input signals to a receiver 72. The add coupler 114 combines the pass-through signal and signals generated by the transmitting element 67.

In the illustrated embodiment, the receiving element includes two 1xn couplers 116, a plurality of tunable (or fixed) filters 118, a plurality of selectors 69, a plurality of 2xl switches 71, and a plurality of receivers 72. The 1xn couplers 116 may comprise one optical fiber lead and a plurality of optical fiber leads which serve as drop leads 120. The drop leads 120 may be connected to the plurality of tunable filters 118 operable to pass a selected wavelength and reject other wavelengths. The selected wavelengths from 118A and 118B are passed to the selector 69 and switch 71, which allows selective connection of the receiver 72 with either an associated drop signal coming from the ring 20 or an associated drop signal coming from the ring 21. Such selective switching may be used to implement OUPSR protection switching. In a particular embodiment, the selector 69 is initially configured to forward to the local client(s) traffic from a fiber 20 or 21 that has the lower BER. A threshold value is established such that the switch remains in its initial state as long as the BER does not exceed the threshold. Another threshold or range may be established for power levels. For example, if the BER exceeds the BER threshold or if the power falls above or below the preferred power range, the switch selects the other signal. Commands for switching may be transmitted via connection 79. This results in local control of switching and simple and fast protection.

In the illustrated embodiment, the transmitting element 67 comprises a 2xn coupler 122 and a plurality of tunable transmitters 124 that transmit at a set of wavelengths assigned to the node 14. The 2xn coupler 122 comprises a plurality of leads which serve as add leads and may be connected to the plurality of tunable transmitters 124. The tunable transmitters 124 are operable to transmit add signals at selected wavelengths and thus provide flexible assignment of wavelengths to the node 14. The coupler 122 splits the add signal into two substantially similar signals, wherein one signal is added to the fiber 20 and the other signal is added to the fiber 21. The add signals are forwarded to the add couplers 114 for addition to the associated fiber 20 or 21, as described above. The add couplers 114 receives the add signals transmitted at one of the assigned wavelengths and combines the pass-through signal with the add signals transmitted at the assigned wavelengths.

In the illustrated embodiment, the same or substantially the same signals are communicated over both the fibers 20 and 21. Therefore, a single set of the receivers 72 may be used to receive signals from the fibers 20 or 21 (one or the other are received, depending on the position of switch 71 and selector 69), the same set of the transmitters 124 may be used to transmit the same signals to both the fibers 20 and 21. Such a configuration is appropriate when providing OUPSR protection. However, in other embodiments, the node 14 may include a separate set of the receivers 72 associated with each of fibers 20 and 21, and a separate set of the transmitters 124 associated with each of fibers 20 and 21. In this case, no switch 71 and selector 69 are needed. Instead, the drop signals associated with each fiber 20 or 21 are coupled to the set of the receivers 72 associated with each ring. Therefore, different signals may be received from the fibers 20 and 21.

Similarly, instead of splitting the signal from a set of the transmitters 124 using a coupler 122 and providing this signal to both the fibers 20 and 21, a different signal may be generated by the set of the transmitters 124 associated with the fiber 20 and the set of the transmitters 124 associated with the fiber 21. Therefore, different signals may be communicated over each fiber 20 and 21. For example, a first signal can be added in a particular channel on the fiber 20 at the node 14, and an entirely different signal can be added in the same channel on the fiber 21 by the same node 14.

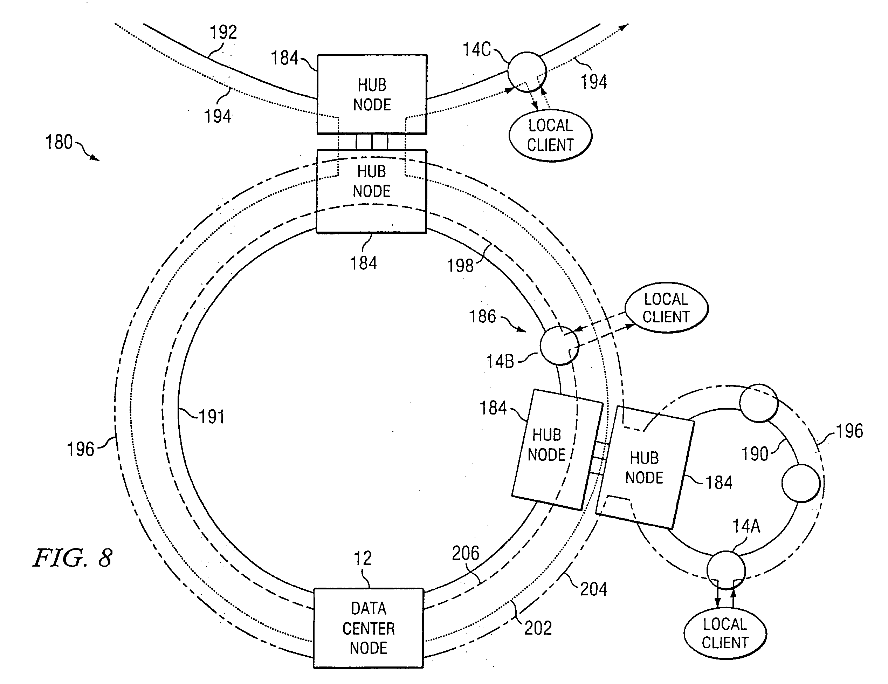

FIGURE 8 illustrates one embodiment of an optical system 180. In this embodiment, the optical system 180 includes multiple optical rings in which a number of optical channels are transmitted and received by the optical ring networks. The optical system 180 may be a wavelength division multiplexing (WDM), dense wavelength division multiplexing (DWDM), or other suitable multi-channel systems.

Referring to FIGURE 8, the system 180 includes a first optical fiber 191, a second optical fiber 192, a third optical fiber 190, and a plurality of nodes 14. Optical information signals are transmitted over the fibers 191, 192, and 193 to provide intra- and inter-network traffic. Thus, each node 14 is operable to transmit traffic to and receive traffic from any node in the system 180. The first fiber 191 is coupled to the second fiber 192 and the third fiber 190 via hub nodes 184. The hub nodes 184 are operable to pass traffic to the optical fiber 191 from the fibers 190 and 192 and to drop traffic from the optical fiber 191 to the optical fibers 190 and 192. In one embodiment, the hub nodes 184 comprises a multiplexer, a demultiplexer, and a switch fabric operable to terminate or pass traffic channels. Each ring network may be used in a short-haul metropolitan network, and long-haul network or any other suitable network or combination of networks.

In the illustrated embodiment, the optical fibers 190, 191, and 192 are a single-unidirectional fiber, each transporting traffic in a counterclockwise direction. The nodes 14A, 14B, and 14C are each operable to add and drop traffic to and from the fibers 190, 191, and 192, respectively. In particular, each node 14 receives traffic from local clients and adds that traffic to the respective optical ring. At the same time, each node 14 receives traffic from the respective ring and drops traffic destined for the local client. In the illustrated embodiment, each node 14 is assigned a wavelength in which traffic is added and dropped from the respective ring. For example, the node 14A may be assigned wavelength λ₄₀, wherein the node 14A is configured to drop and add signals transmitting at wavelength λ₄₀. Similarly, the nodes 14B and 14C may be assigned the wavelengths λ₁ and wavelength λ₂₀, respectively, to add and drop traffic to the fibers 191 and 192, respectively. In this embodiment, the nodes 14 control interference in the system 180 by both adding and removing traffic at the assigned wavelengths. In one embodiment, the wavelength λ₂₀ is in the middle of the C-band, which is preferable for long-haul transmission because of the reduced power tilt and improved OSNR. Furthermore, this embodiment reduces, minimizes, or eliminates the need for optical-to-electrical conversion at the nodes 14.

In the illustrated embodiment, the data center node 12 receives the optical signals 196 transmitted at the wavelength λ₄₀, 198 transmitted at the wavelength λ₁, and 194 transmitted at λ₂₀ from nodes 14A, 14B, and 14C, respectively. The hub nodes 184 pass the inter-network traffic, optical signals 194 and 196, to the fiber 191. The data center node 12 extracts data and any request from the optical signals 194, 196, and 198 including a destination node. The data center node 12 generates responses, where appropriate, and sorts the data and responses by destination node. Optical signals 202, 204, and 206 are transmitted at the wavelengths λ₄₀, λ₂₀, and λ₁, respectively, by the data center node 12 initially over the fiber 191. The hub nodes 184 associated with the fiber 190 and 192 pass the wavelengths associated with the respective ring. In one embodiment, the hub nodes 184 comprise fixed optical filters. In the illustrated embodiment, the optical signal 202 is passed to fiber 190, because the transmitting wavelength λ₁ is assigned to the node 14A located on the fiber 190. Similarly, the signal 204 is passed to the fiber 192, because the transmitting wavelength λ₂₀ is assigned to the node 14C located on the fiber 192. The local nodes 14A, 14B, and 14C are configured to receive λ₄₀, λ₁, and λ₂₀, respectively. This embodiment reduces, minimizes, or eliminates the need for optical-to-electric conversion at the nodes to determine the destination node for each data segment because data processing can be done at the data center node 12.

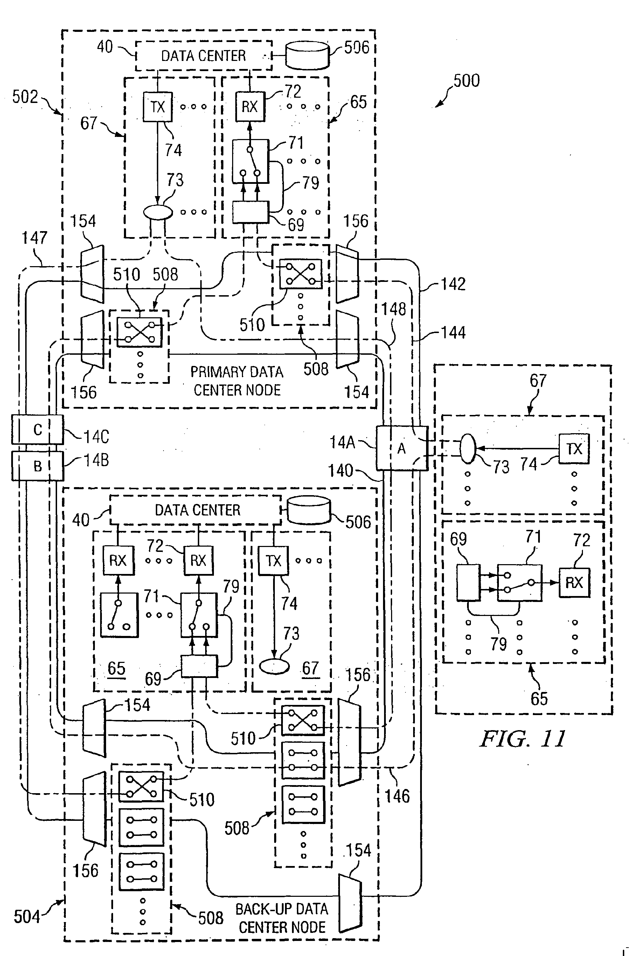

FIGURE 9 is a flow diagram illustrating one embodiment of a method for transmitting traffic in an optical network. In this embodiment, a data center node in a network, such as the network 10, or system, such as system 180, transmits data destined for a node at a wavelength assigned to that node, which is disparate from wavelengths assigned to other nodes. Thus, the nodes can passively drop and add traffic without the need for optical-to-electrical conversion. Referring to FIGURE 9, the method for transmitting traffic in an optical network or system begins with step 240, wherein a data center node 12 receives an optical information signal including information identifying the destination node. Proceeding to step 242, the data is sorted based by destination node. In one embodiment, an electric switch 36 receives a command signal from a controller 44 identifying a buffer address associated with the destination node. It will be understood that the illustrated steps may be performed in a different order and some steps may be combined. In one embodiment, the optical information signal comprises inter-network traffic, as discussed in connection to FIGURE 8. Next at step 244, the data is stored in a buffer. In one embodiment, the buffer is a traffic buffer 42, wherein a plurality of buffer addresses are associated with a plurality of destination nodes. In this embodiment, the electric switch 36 passes the data to the buffer address associated with the destination node. Proceeding to step 246, the data center node 12 transmits the buffered data at a wavelength assigned to the destination node, disparate form wavelengths assigned to other nodes. In one embodiment, the transmitters 28 are coupled to an optical splitter operable to split the transmitted signal such that one signal is propagated in a clockwise optical ring and the other signal is propagated in a counterclockwise optical ring.

FIGURE 10 is a flow chart diagram illustrating one embodiment of a method for transmitting traffic in an optical network or system. In this embodiment, the data center node 12 in the network, such as the network 10, or the system, such as system 180, transmits data, including a response to a request, destined for a node at a wavelength assigned to that node, which is disparate from wavelengths assigned to other nodes. Thus, the nodes can passively drop and add traffic without the need for optical-to-electrical conversion. Referring to FIGURE 10, the method for transmitting traffic in an optical network begins with step 320, wherein traffic is received at a data center node 12 including a request from a node in the network or system. In one embodiment, the request is for an audiovisual file to be sent to a different node. In another embodiment, the request is to store data associated with a client. Proceeding to step 340, the data center node 12 accesses a services module 38 to process the request. Next at step 360, the services module 38 processes the request. At step 380, the services module 38 generates a response to the request including data associated with the processing of the request. In one embodiment, the response is a file containing audiovisual content. In another embodiment, the response is an acknowledgement that data was received and stored. In yet another embodiment, the response includes results of data processed by the services module 38. Finally, at step 400, the data center node 12 transmits the response at a wavelength assigned to the destination node, disparate from wavelengths assigned to other nodes. It will be understood that the destination node may be the same or different from the originating node.

FIGURE 11 illustrates one embodiment of an optical network 500 providing data replication for disaster recovery. In this embodiment, the network 500 is an optical network in which a number of optical channels are carried over a common path at disparate wavelengths. The network 500 may be a WDM, DWDM, or other suitable multichannel network and may be used for mission critical data. The network 500 may be used in a short haul metropolitan network, a long haul inter-city network or any other suitable network or combination of the networks.

Referring to FIGURE 11, the network 500 includes a plurality of nodes 14, a first optical fiber 140, a second optical fiber 142, a primary data center node 502, and a back-up data center node 504. Primary data center node 502 and back-up data center node 504 may be any suitable set of first and second data center nodes of which one is active and the other provides back-up in response to a back-up event. A back-up event, as used herein, failure, user request, permissive swap, maintenance, or other suitable events. In this embodiment, optical signals may be transmitted in both a clockwise and counterclockwise direction around the fibers 140 and 142, respectively. Optical information signals are transmitted in different directions on the fibers 140 and 142 to provide fault tolerance. The optical signals have at least one characteristic modulated to encode audio, video, textual, real-time, non-real-time and/or other suitable data. Modulation may be based on PSK, IM and other suitable methodologies.

The nodes 14 are operable to add and drop traffic to and from the fibers 140 and 142. At each node 14, traffic received from local clients is added to the fibers 140 and 142, while traffic destined for local clients is dropped. Traffic may be added to the fibers 140 and 142 by inserting the traffic channels or otherwise combining signals of the channels into a transport signal of which at least a portion is transmitted on one or both fibers 140 and 142. Traffic may be dropped from the fibers 140 and 142 by making the traffic available for transmission to the local clients. In a particular embodiment, traffic is passively added to and dropped from the fibers 140 and 142. In one embodiment, traffic may be dropped and yet continue to circulate on the fibers 140 and 142. In a particular embodiment, traffic may be passively added to and/or dropped from the fibers 140 and 142 by splitting/combining, which is without multiplexing/demultiplexing, the signal in the transport rings and/or separating parts of a signal in the ring.

In a particular embodiment, each local node 14 is assigned a set of wavelengths (or a portion of a set of wavelengths) in which to add its traffic to the fibers 140 and 142. In the illustrated embodiment, the set of wavelengths assigned to a local node is two wavelengths that are disparate from wavelengths assigned to the other local nodes 14. For example, the local node 14B may be assigned a wavelengths λ₃ and λ₄ disparate from other wavelengths in the network 500, wherein local node 14B adds traffic at the wavelength λ₃ to the fibers 140 and 142 and drops traffic transmitted at wavelength λ₄ from the fibers 140 and 142. Thus, in this example, the network 500 controls interference by reserving a set of wavelengths for dropping traffic disparate from a set of wavelengths for adding traffic, wherein the wavelengths in each set are disparate from other wavelengths in the network 500. Furthermore, this embodiment may reduce, minimize, or eliminate the need for optical-to-electrical conversion for dropping traffic at a local node 14.

In one embodiment, the local nodes 14 includes a transmitting element 67 and a receiving element 65. The receiving element is operable to receive, selectively switch between two signals, and decode the selected signal. The transmitting element is operable to encode an optical information signal and add two substantially similar signals to the optical fibers 140 and 142. The details of the receiving element 65 and 67 will be discussed in more detail below.

In one embodiment, the primary data center node 502 includes demultiplexers 156, a fault switching unit 508, a receiving element 65, a data center 40, a transmitting element 67, multiplexers 154, and a storage unit 506. The demultiplexers 156 demultiplexes WDM signals transmitted over the optical fibers 140 and 142 into constituent channels, typically resulting in two signals, one from each ring, associated with a single channel. The fault switching unit 508 is operable to selectively pass constituent signals to the receiving unit 65 or pass the constituent channel through the primary data center node 502 to the corresponding multiplexer 154. The receiving element 65 selectively recovers the encoded data from the corresponding signal associated with each channel and sends the data to the data center 40. The data center 40 receives the data, sorts the data by destination node, and passes the sorted data to the transmitting element 67. Additionally, the data center 40 may pass data to and receive data from the storage unit 506. If data center 40 passes data to the storage unit 506, a copy substantially similar to the data passed to the storage unit 506 may also be passed to the transmitting element 67 for transmission to the back-up data center node 504. It will be understood that the copy may be in a different form or format. The transmitting element 67 receives, encodes, and transmits the data at a wavelength that the destination node is configured to receive. In this embodiment, the destination node may include the back-up data center node 504.

The fault switching units 508 are operable to receive constituent channels from the demultiplexer 156 and either pass the constituent signal to the corresponding multiplexer 154 or the receiving unit 65. In the case when no fault is detected in the network 500, both switching units 508 in the primary data center 502 pass the constituent channels from the demultiplexers 156 to the receiving unit 65. In the event of a data center 40 failure, the fault switching units 508 pass the constituent channels from the corresponding demultiplexer 156 directly to the corresponding multiplexer 154. In one embodiment, a fault switching unit 508 may comprise a plurality of 2x2 switches 510. In normal operation, each 2x2 switch 510 receives a disparate constituent channel and each is operable to selectively pass the constituent channel to the data center 40 via the receiving element 65. Each 2x2 switch 510 includes a first and a second output. The first output is coupled to a corresponding multiplexer 154, such that a constituent signal may pass through the primary data center node 502 via the first output. The second output is coupled to the receiving element 65 and is operable to drop a constituent channel to the receiving element 65.

In one embodiment, the receiving elements 65 includes a plurality of selectors 69, a plurality of 2x1 switches 71, and a plurality of receivers 72. The demultiplexed channels, or dropped channels in the case of the local node 14B, are forwarded to one of the plurality of selectors 69 and corresponding switches 71, which allows selective connection of the receiver 72 with either an associated signal coming from the fiber 140 or an associated signal coming from the fiber 142. In a particular embodiment, the switch 71 is initially configured to forward to the receiver 72 from a fiber 140 or 142 that has the lower BER. A threshold value is established such that the switch 71 remains in its initial state as long as the BER does not exceed the threshold. Another threshold or range may be established for power levels. For example, if the BER exceeds the BER threshold or if the power falls above or below the preferred power range, the selector 69 sends a command signal to the switch 79 to switch and thus selecting the other signal. Commands for switching may be transmitted via connection 79 to the 2x1 switch 71. The use of such dual signals provides OUPSR protection or the allowance of traffic to be communicated from a first node 14 to a second node 14 over at least one of the rings 140 and 142 in the event of a line break or other damage to the other of the rings 140 and 142.

The transmitting element 67 includes a plurality of transmitters 74 and a plurality of couplers 73. In the case of the transmitting element 67 of the data center node 12, each transmitter 74 is associated with one of the nodes 14 or the back-up data center node 504, such that the associated transmitter 74 transmits at a wavelength that the corresponding node 14 or 504 is configured to receive. In the case of the transmitting element 67 of the local node 14A, each transmitter 74 transmits at a wavelength disparate from wavelengths transmitted at other nodes. The coupler 73 splits the signal into two substantially similar signals, wherein one signal is added to the fiber 140 and the other signal is added to the fiber 142.

The back-up data center node 504, during normal operation, stores a substantially similar copy of the data stored in the storage unit 506 at the primary data center node 502. In the case of a failure of the data center 40 or the primary data center node 502, back-up data center node 504 will perform the functions of the primary data center node 502, such as receiving traffic from the plurality of nodes 14, sorting the traffic by destination, and transmitting the traffic to a corresponding destination node 14 at the assigned wavelength for that node 14. In the illustrated embodiment, the back-up data center node 504 includes demultiplexers 156, a fault switching unit 508, a receiving element 65, a data center 40, a transmitting element 67, multiplexers 154, and a storage unit 506. The demultiplexers 156 demultiplexes WDM signals transmitted over the optical fibers 140 and 142 into constituent channels, typically resulting in two signals, one from each ring, associated with a single channel. The fault switching unit 508 is operable to selectively pass constituent signals to the receiving unit 65. The receiving element 65 selectively recovers the encoded data from the corresponding signal associated with each channel and sends the data to the data center 40. The data center 40 receives the data, sorts the data by destination node, and passes the sorted data to the transmitting element 67. Additionally, the data center 40 may pass data to and receive data from the storage unit 506. During normal operation, in one embodiment, the data center 40 receives a copy of substantially similar data previously stored at the primary data center node 502 and transmits to the back-up data center node 504 at a wavelength assigned to the back-up data center node 504. The transmitting element 67 receives, encodes, and transmits the copied data at a wavelength that back-up data center node 504 is configured to drop.

The fault switching units 508 are operable to receive constituent channels from the demultiplexer 156 and either pass the constituent channels to the corresponding multiplexer or the receiving unit 65. In the case when no fault is detected in the network 500, both switching units 508 of the back-up data center node 504 merely pass the constituent channels encoding the copied data to the storage unit 506 via the data center 40. In the event of a data center 40 failure of primary data center node 502, the fault switching units 508 of the back-up data center node 504 drop all constituent channels from the corresponding demultiplexer 156 to the receiving element 65. In one embodiment, a fault switching unit 508 may comprise a plurality of 2x2 switches 510. Each 2x2 switch receives a disparate constituent channel and each is operable to selectively pass the constituent channel to the data center 40 via the receiving element 65. Each 2x2 switch 510 includes a first and a second output. The first output is coupled to a corresponding multiplexer 154, such that a constituent signal may pass through the back-up data center node 504 via the first output. The second output is coupled to the receiving element 65 and is operable to drop a constituent channel to the receiving element 65. During normal operation, the 2x2 switch 510 associated with the constituent channel encoding the copied data is passed to the receiving unit 65, while all other constituent channels are passed through the back-up data center 504 to the corresponding multiplexer. In the case of a failure of the data center 40 of the primary data center node 502 or the primary data center node 502, the fault switching units pass all constituent channels to the receiving element 65.

The storage unit 506 of the back-up data center node 504 may be located at the back-up data center node 504, as illustrated, or off the network 500. It may be co-located with the storage unit 506 of the primary data center node 502. For example, the location may be a high security, underground location. Alternatively, the storage unit 506 of both primary and back-up data center node 502 may comprise the same storage unit with separate connection to the same storage unit 506.

Total λ of the network 500 may be divided and assigned to each node 14 depending upon the local or other traffic of the nodes 14. Furthermore, the set of disparate transmitting wavelengths and the set of disparate receiving wavelengths may be disparate wavelengths for each node 14. For an embodiment in which the total number of disparate wavelengths is 80, the total number of nodes 14 is four, and the traffic is even in each node 14, 20 disparate wavelengths may be assigned to each node 14, wherein 10 disparate wavelengths are assigned as transmitting λ's and 10 disparate wavelengths are assigned as receiving λ's. If each λ is modulated by 10 gigabits per second data rate, each node can send 100 gigabits per second (10 gigabits per second times 10 λ) to all other nodes in the network 500. For a WDM system, the λ may be between 1,530 nanometers and 1,565 nanometers. In one embodiment, the channel spacing over the C-band may be 50 GHz between transmitting and receiving λ for each node 14 and thus 100 GHz between receiving λ's and 100 GHz between transmitting λ's or .8 nanometers.

In one aspect of operation, the node 14B adds the same or substantially the same traffic signals 144 and 146 to the fibers 140 and 142, respectively. In the illustrated embodiment, the traffic signals 144 and 146 are transmitted at the assigned wavelength λ₃. The optical beam splitter 73 splits beam into the same or substantially the same traffic signals 144 and 146. The traffic signal 146 is a counterclockwise traffic signal along optical fiber 142, and the traffic signal 144 is a clockwise traffic signal along the optical fiber 140. Both signals are received by the primary data center node 502. The primary data center node 502 demultiplexes the clockwise and counterclockwise signals into constituent channels resulting in two signals, one from each ring, associated with each channel. Both signals are forwarded from the fault switching units 508 to the receiving element 65 of the primary data center node 502, which selectively passes traffic associated with each channel. If a fault is detected in the transmitted signal, then OUPSR protection is implemented by the network. The decoded data is passed to the data center 40, which receives the data, provides responses to any requests, sorts the data and responses by destination node, and passes the data to the transmitting element 67. In one embodiment, request are addressed to the data center node 502. Additionally, the data center 40 may pass traffic to the storage unit 506. The transmitting element 67 receives, encodes, and transmits the sorted traffic and a copy of data stored in storage unit 506 at a wavelength that the destination node is configured to receive. For example, the back-up data center node 504 is assigned a wavelength λ_{c} for receiving a copy of substantially similar data stored at the primary data center node 502. The transmitting element 67 transmits encoded data for the back-up data center node 504 in the optical signal 148 at the wavelength λ_{c} and propagating in the clockwise direction over fiber 140 and the optical signal 147 at the wavelength λ_{c} and propagating in the counterclockwise direction 142. The traffic signal 147 is propagated in the counterclockwise direction along the optical fiber 142 until received by the back-up data center node 504, at which point the signal is passed to a demultiplexer 156. The signal 147 is passed through to the receiving element 65 via the switching unit 508. The traffic signal 148 is propagated in the clockwise direction along the optical fiber 140 until received by the back-up data center node 504, at which point the signal is passed to a demultiplexer 156. The signal 148 is passed through to the receiving element 65 via the switching unit 508. The receiving element 65 selectively passes encoded data, as discussed in more detail above. The copy of the data is passed to the storage unit 506.

In another aspect of operation, if a failure of the data center 40 in the primary data center node 502 is detected, all traffic is passed through the primary data center node 502 and the back-up data center node 504 takes the place of the primary data center node 502. In this case, the back-up data center node 504 operates as a network with a single data center node as illustrated in FIGURE 1, 2, 3, or 4.

In yet another aspect of operation, if the primary data center node 502 fails, then the network 500 will implement either OUPSR or OSPPR, depending on whether a preemptable traffic format is implement, as illustrated in FIGURES 3 and 4, respectively. In one embodiment, the hardware switching time is 50 milliseconds (ms). The back-up data center node 504 will serve as the single data center node necessary to implement receiving, sorting by destination node, and transmitting at a wavelength assigned to the destination node, which was discussed above regarding FIGURES 3 and 4.

In either failure scenarios, the storage unit 506 of the back-up data center 504 will serve as the primary storage for network 500 until the failure is corrected or repaired. Once the failure is repaired or corrected, the storage unit 506 of the back-up data center 504 may transmit a copy of the stored data to the primary data center node 502, at which point network 500 will resume normal operations. Alternatively, the back-up data center 504 may continue to act as the primary data center resulting in the restored primary data center node 502 acting as the back-up data center node going forward.

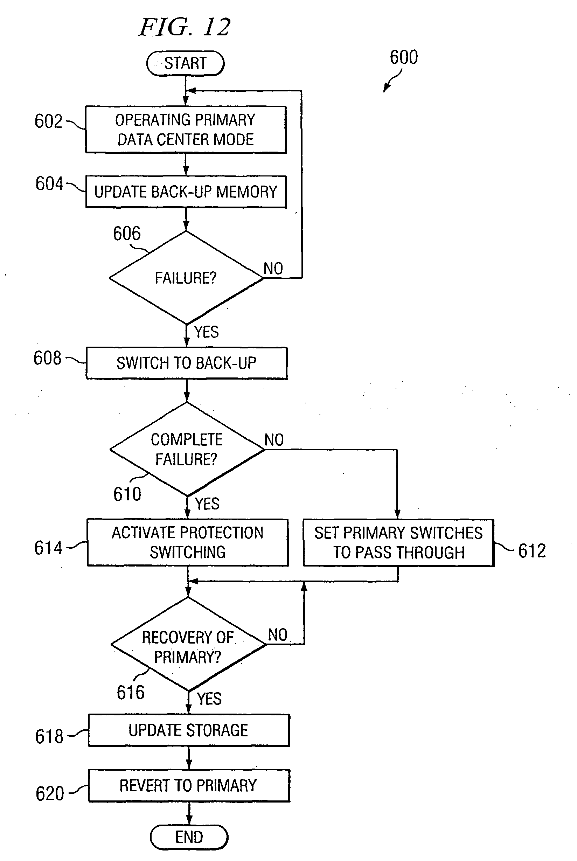

FIGURE 12 illustrates a flowchart of an exemplary method 600 data replication for disaster of recovery. Method 600 is described in respect to network 500 illustrated in FIGURE 11. However, any other suitable system may be used with method 600 without departing from the scope of this disclosure. Generally, method 600 describes storing data at a primary data center node 502 and transmitting a copy of the stored data to a back-up data center node 504 in order to provide disaster recovery. Moreover, network 500 may use any other suitable technique for performing these tasks. Thus, many of the steps in this flowchart may take place simultaneously and/or in different orders than as shown. Moreover, network 500 may use methods with additional steps, fewer steps, and/or different steps so long as the methods remain appropriate.

Method 600 begins at step 602 where a primary data center node 502 is operating, which includes storing at least a portion of traffic received from network 500 and transmitting a copy of the stored traffic at a wavelength assigned to the back-up data center node 504. At step 604, the back-up data center node 504 updates its memory by storing copied data in the storage unit 506 at back-up data center node 504. At decisional step 606, if network 500 does not detect a failure at the primary data center node 502, then method 600 returns to step 602. If a failure is detected at the primary data center node 502 then network 500 switches to back-up data center node 504 at step 608, such that back-up data center node 504 takes the place of the primary data center node 502. At the decisional step 610, if a complete failure at the primary data center node 502 is not detected, then, at step 612, the fault switching units 508 are set to pass traffic through the primary data center node 502. If a complete failure is detected at step 610, then at step 614 network 500 activates protection switching, which may include OUPSR or OSPPR, where appropriate. A complete failure of the primary data center node 502 occurs when at least a portion of the traffic is not able to be passed through primary data center node 502. A partial failure occurs when the data center 40 of the primary data center node 502 is unable to perform at least one of its primary functions. At the decisional step 616, if a recovery of the primary data center node 502 is not detected then method 600 returns to step 616. If a recovery of the primary data center node 502 is detected, then the back-up data center node 504 updates the storage unit 506 of the primary data center node 502 at step 618. Once the primary data center node 502 storage unit 506 is fully updated, then network 500 reverts to normal operating conditions at step 620.

Although the present invention has been described with several embodiments, various changes and modifications may be suggested to one skilled in the art. It is intended that the present invention encompass such changes and modifications as fall within the scope of the appended claims.

## Claims

1. An optical network, comprising:
an optical ring;
a plurality of local nodes coupled to the optical ring;
each local node of the plurality of local nodes configured to receive traffic at an assigned wavelength, disparate from wavelengths assigned to other local nodes; and
a data center node coupled to the optical ring and operable to receive traffic from the plurality of local nodes, sort at least some of the traffic by destination, and transmit the traffic to a corresponding destination node at the assigned wavelength for that node.

2. The optical network of Claim 1, wherein at least some of the traffic comprises a request for data and the data center node is operable to retrieve the data.

3. The optical network of Claim 1, wherein the optical ring comprises bi-directional pathways.

4. The optical network of Claim 1, wherein the plurality of local nodes are further operable to pass through traffic at wavelengths disparate from assigned wavelengths without optical-to-electrical conversion.

5. The optical network of Claim 1, wherein the data center node comprises a switch operable to selectively pass the traffic to a transmitter transmitting at the assigned wavelength.

6. The optical network of Claim 1, wherein the data center node comprises a services module operable to process a request for data and provided the requested data.

7. The optical network of Claim 6, wherein the requested data comprises audiovisual content.

8. The optical network of Claim 1, wherein at least one of the plurality of nodes is a hub node operable to selectively pass and terminate individual traffic streams.

9. The optical network of Claim 8, wherein the hub node is a first hub node and is coupled to a second hub node associated with a second optical ring.

10. The optical network of Claim 9, wherein the destination node is located on the second optical ring.

11. A data center node, comprising:
a plurality of receivers operable to receive traffic including information identifying a destination node;
a data center operable to selectively pass the traffic to a transmitter associated with the destination node; and
a plurality of transmitters operable to transmit the traffic at a wavelength assigned to the destination node.

12. The data center node of Claim 11, wherein the data center comprises a switch operable to selectively pass the traffic to a transmitter transmitting at the assigned wavelength.

13. The data center node of Claim 11, wherein the data center comprises a services module operable to process a request for data and provide the requested data.

14. The data center node of Claim 13, wherein the requested data comprises audiovisual content.

15. A method of transmitting traffic in an optical network, comprising:
receiving traffic from a plurality of local nodes at a data center node coupled to an optical ring;
sorting the traffic by destination node;
transmitting the traffic at a wavelength assigned to the destination node; and
receiving traffic at the destination node at the assigned wavelength and passing through traffic not at the assigned wavelength.

16. The method of Claim 15, wherein the assigned wavelength is disparate from wavelengths assigned to other local nodes.

17. The method of Claim 15, wherein the traffic comprises a request for data.

18. The method of Claim 17, further comprising transmitting the requested data to the destination node.

19. The method of Claim 15, further comprising:
transmitting traffic in a first direction in the optical ring; and
transmitting traffic in a second direction in the optical ring.

20. The method of Claim 15, further comprising selectively positioning a set of switches in each local node to provide protection switching in response to a fault occurring in the optical rings.

21. The method of Claim 15, further comprising dropping traffic to a second optical ring.

22. The method of Claim 21, wherein the destination node is located on the second optical ring.

23. A system for transmitting traffic in an optical network, comprising:
means for receiving traffic from a plurality of local nodes at a data center node coupled to an optical ring;
means for sorting the traffic by destination node;
means for transmitting the traffic at a wavelength assigned to the destination node; and
means for receiving traffic at the destination node at the assigned wavelength and passing through traffic not at the assigned wavelength.

24. The system of Claim 23, wherein the traffic comprises a request for data.

25. The system of Claim 24, further comprising a means for providing and transmitting the requested data to the destination node.

26. The system of Claim 23, wherein the optical ring comprises a first and a second optical ring, further comprising means for selectively switching traffic from one ring to the other ring.

27. An optical network, comprising:
an optical ring;
a plurality of local nodes coupled to the optical ring;
each local node of the plurality of local nodes configured to receive traffic at an assigned wavelength, disparate from wavelengths assigned to other local nodes and operable to pass through traffic at wavelengths disparate from the assigned wavelength without optical-to-electrical conversion; and
a data center node coupled to the optical ring and operable to receive traffic from the plurality of local nodes including request for data, provide the requested data, sort at least some of the traffic by destination, and transmit the traffic to a corresponding destination node at the assigned wavelength for that node.

28. An optical network, comprising:
an optical ring;
a plurality of local nodes coupled to the optical ring;
each local node of the plurality of local nodes configured to receive traffic at an assigned wavelength, disparate from wavelengths assigned to other local nodes; and
a data center node coupled to the optical ring and operable to provide centralized storage applications through a service module, receive traffic from the plurality of local nodes including request for data, provide the requested data, sort at least some of the traffic by destination, and transmit the traffic to a corresponding destination node at the assigned wavelength for that node.

29. An optical network, comprising:
an optical ring;
a plurality of local nodes coupled to the optical ring;
each local node of the plurality of local nodes configured to receive traffic at an assigned wavelength, disparate from wavelengths assigned to other local nodes;
a primary data center node coupled to the optical ring and operable to receive traffic from the plurality of nodes, store data from at least some of the traffic, sort at least some of the traffic by destination, transmit the sorted traffic to a corresponding destination node at the assigned wavelength for that node, and transmit a copy of the stored data to a back-up data center node; and
the back-up data center node operable to receive and store the copy of the stored data transmitted by the primary data center node in response to a back-up event, receive traffic from the plurality of nodes, sort at least some of the traffic by destination, and transmit the sorted traffic to a corresponding destination node at the assigned wavelength for that node.

30. The network of Claim 29, wherein at least some of the traffic comprises a request for data and the data center node is operable to retrieve the data.

31. The network of Claim 30, wherein the plurality of nodes are further operable to pass through traffic at wavelengths disparate from assigned wavelengths without optical-to-electrical conversion.

32. The network of Claim 31, wherein at least one of the plurality of local nodes is a hub node operable to selectively pass and terminate individual traffic streams.

33. The network of Claim 32, wherein the hub node is a first hub node and is coupled to a second hub node associated with a second optical ring.

34. The network of Claim 33, wherein the back-up data center node is located on the second ring.

35. A method of transmitting traffic in an optical network, comprising:
receiving traffic from a plurality of local nodes at a primary data center node coupled to an optical ring;
storing data from at least some of the traffic at the primary data center node;
copying the stored data;
transmitting the copy of the stored data at a wavelength assigned to a back-up data center node;
receiving the copy of the stored data transmitted by the primary data center node and passing through traffic not at the assigned wavelength; and
storing the copy of the stored data at the back-up data center node.

36. The method of Claim 35, wherein receiving and storing the copy of the stored data is in response to a back-up event.

37. The method of Claim 36, further comprising:
receiving a request for stored data for a destination node; and
transmitting some of the stored data at a wavelength assigned to the destination node.

38. The method of Claim 35, wherein the wavelength assigned to the back-up data center node is disparate from wavelengths assigned to other nodes.

39. The method of Claim 35 further comprising:
sorting the traffic by destination node;
transmitting the traffic at a wavelength assigned to the destination node and disparate from the a wavelength assigned to the back-up data center node; and
receiving traffic at the destination node at the wavelength assigned to the destination node and passing through traffic not at the wavelength assigned to the destination node.

40. The method of Claim 35, further comprising selectively positioning a set of switches in all nodes to provide protection switching in response to a fault occurring in the optical rings.

41. An optical network, comprising:
an optical ring;
a plurality of local nodes coupled to the optical ring;
each local node of the plurality of local nodes configured to transmit traffic at an assigned wavelength, disparate from transmitting wavelengths assigned to other local nodes; and
a data center node coupled to the optical ring and operable to receive traffic from the plurality of local nodes, sort at least some of the traffic by destination, and transmit the traffic destined for the local nodes at at least one wavelength of the optical ring.

42. A method of transmitting traffic in an optical network, comprising:
receiving traffic from a data center node coupled to an optical ring, the data center node operable to receive traffic from a plurality of local nodes, sort at least some of the traffic by destination, and transmit the traffic destined for the local nodes at at least one wavelength of the optical ring; and
transmitting traffic at an assigned wavelength, disparate from transmitting wavelengths assigned to other local nodes.
